# EUROPEAN PATENT APPLICATION

(11) **EP 3 670 908 A1**
(43) Date of publication of application: **24.06.2020**
(21) Application number: 18876297.5
(22) Date of filing: 29.10.2018
(51) Int. Cl.: F04B 27/18, F04B 39/00, F16K 31/06

(54) **CONTROL VALVE FOR VARIABLE DISPLACEMENT COMPRESSOR**

(30) Priority: 07.11.2017 JP 2017214870
(71) Applicant: Fujikoki Corporation, Tokyo 158-0082 (JP)
(72) Inventor: KUME, Yoshiyuki, Tokyo 158-0082 (JP); ASANO, Hisashi, Tokyo 158-0082 (JP); ITOH, Masaharu, Tokyo 158-0082 (JP); TANO, Shintaro, Tokyo 158-0082 (JP)
(74) Representative: Ter Meer Steinmeister & Partner
(86) International application number: PCT/JP2018/040040
(87) International publication number: WO 2019/093166

(57) **Abstract**

Provided is a variable-capacity compressor control valve that can effectively suppress an increase in the sliding resistance and deterioration of the control properties associated therewith while avoiding intrusion of foreign matter into a sliding-surface gap (i.e., clearance) formed between a main valve element and a guide hole. Also provided is a variable-capacity compressor control valve that can have stable sealing properties irrespective of the dimension errors of the parts forming the valve. A plate-like ring member 20E for sealing the gap between the valve chamber 21 and the pressure-sensitive chamber 45 is disposed between the guide hole 19 and the main valve element 10 with the inner end of the plate-like ring member 20E being curved and shaped into a tubular shape and thus forming a tubular portion 20Eb, the tubular portion 20Eb being adapted to be in sliding contact with the outer wall of the main valve element 10.

## Description

### Technical Field

The present invention relates to a variable-capacity compressor control valve for use in an automotive air conditioner, for example. In particular, the present invention relates to a variable-capacity compressor control valve in which operation failures of a valve element due to foreign matter, which flows into a sliding-surface gap formed between the valve element and a guide hole, are unlikely to occur.

### Background Art

Usually, a control valve for a variable-capacity compressor used for an automotive air conditioner, for example, is adapted to receive a discharge pressure Pd from a discharge chamber of the compressor and control a crank chamber pressure Pc by controlling the discharge pressure Pd in accordance with a suction pressure Ps of the compressor. Typically, such a control valve has, as seen in Patent Literature 1 below, for example, a valve body that includes a valve chamber with a valve orifice, a Ps inlet/outlet port communicating with the suction chamber of the compressor, a Pd introduction port arranged upstream of the valve orifice and communicating with the discharge chamber of the compressor, and a Pc inlet/outlet port arranged downstream of the valve orifice and communicating with the crank chamber of the compressor; a main valve element (i.e., a valve stem) for opening or closing the valve orifice; an electromagnetic actuator with a plunger for moving the main valve element in the direction to open or close the valve orifice; a pressure-sensitive chamber adapted to receive the suction pressure Ps from the compressor via the Ps inlet/outlet port; and a pressure-sensitive reaction member, such as a bellows device, adapted to urge the main valve element in the direction to open or close the valve orifice in accordance with the pressure in the pressure-sensitive chamber.

A variable-capacity compressor control valve described in Patent Literature 2 below includes, in addition to the aforementioned configuration, an in-valve release passage for releasing the crank chamber pressure Pc to the suction chamber of the compressor via the Ps inlet/outlet port, and a sub valve element for opening or closing the in-valve release passage. When the plunger is continuously moved upward from the lowest position due to the attraction force of the electromagnetic actuator, the sub valve element moves upward together with the plunger while closing the in-valve release passage, and the main valve element is also moved upward so as to follow the sub valve element. Then, after the valve orifice is closed by the main valve element, if the plunger is further moved upward, the sub valve element is caused to open the in-valve release passage.

By the way, in the conventional variable-capacity compressor control valves described in Patent Literature 1 and 2 above, for example, the main valve element for opening or closing the valve orifice is slidably fitted and inserted through a guide hole provided in the valve body. Thus, there is a possibility that a sliding-surface gap (i.e., clearance) formed between the main valve element (or the outer peripheral face thereof) and the guide hole (or the inner wall face thereof) may become clogged with foreign matter (such as scraps generated from cutting or polishing that remain from the time of the machining and assembly process, an abrasive material, worn-away portions resulting from sliding friction, and dust from the outside), which may result in operation failures of the main valve element such that the main valve element becomes difficult to move (e.g., the main valve element may become locked or left).

To eliminate such drawbacks, disposing an O-ring as a sealing member in the sliding-surface gap, which is formed between the main valve element and the guide hole, to avoid accumulation of foreign matter therein is usually considered as seen in Patent Literature 3 below, for example.

### Citation List

### Patent Literature

Patent Literature 1: JP 2010-185285 A
Patent Literature 2: JP 2013-130126 A
Patent Literature 3: JP 2011-043102 A

### Summary of Invention

### Technical Problem

However, in the variable-capacity compressor control valve described in Patent Literature 3 above, for example, since the O-ring is made of a rubber material, there is a concern that if the pressure difference between the portions above and below the O-ring is large, the O-ring may deform (or warp), which in turn may increase the sliding resistance and hysteresis and thus would degrade the control properties. In addition, since each of the O-ring, the main valve element, and the guide hole has dimension errors within its respective tolerance, the O-ring is usually designed to be used while being pressed and elastically deformed so that the O-ring is allowed to be tightly in contact with the main valve element and the guide hole and thus sealing properties are secured. Thus, depending on the dimensions of the parts used, the O-ring would act as excessive sliding resistance on the main valve element and thus would increase the hysteresis of the control properties of the main valve element, which can result in the deterioration of responsiveness.

The present invention has been made in view of the foregoing, and it is an object of the present invention to provide a variable-capacity compressor control valve that can effectively suppress an increase in the sliding resistance and deterioration of the control properties associated therewith while avoiding intrusion of foreign matter into a sliding-surface gap (i.e., clearance) that is formed between a main valve element and a guide hole. It is another object of the present invention to provide a variable-capacity compressor control valve that can have stable sealing properties irrespective of the dimension errors of the parts forming the valve.

### Solution to Problem

To achieve the aforementioned objects, a variable-capacity compressor control valve according to the present invention basically includes a main valve element including a main valve element portion; a valve body including a guide hole through which the main valve element is adapted to be slidably fitted and inserted, a valve chamber with a valve orifice, the valve orifice being adapted to be in contact with or away from the main valve element portion as the main valve element portion is moved, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator adapted to move the main valve element in a direction to open or close the valve orifice; a pressure-sensitive chamber adapted to receive a suction pressure Ps from the compressor via the Ps inlet/outlet port; a pressure-sensitive reaction member adapted to urge the main valve element in the direction to open or close the valve orifice in accordance with a pressure in the pressure-sensitive chamber; and a plate-like ring member disposed between the guide hole and the main valve element, the plate-like ring member having an inner or outer end that is curved and shaped into a tubular shape and thus forming a tubular portion, the tubular portion being adapted to be in sliding contact with an outer wall of the main valve element or an inner wall of the guide hole so as to seal a gap between one of the valve chamber or the Pd introduction port and one of the pressure-sensitive chamber or the Ps inlet/outlet port.

In a preferable aspect, a gap is provided between the main valve element and a portion of the guide hole below the plate-like ring member and on the side of the valve chamber.

In another preferable aspect, the plate-like ring member has the tubular portion formed at the inner end of the plate-like ring member, and the plate-like ring member is securely held in the guide hole with the tubular portion adapted to be in sliding contact with the outer wall of the main valve element.

In further another preferable aspect, the plate-like ring member is sandwiched between two members forming the guide hole of the valve body.

In still another preferable aspect, the two members are fixed together through press fitting.

In yet another preferable aspect, at least one of the two members has a stopper portion, the stopper portion being adapted to regulate movement of a plunger of the electromagnetic actuator.

In yet another preferable aspect, the plate-like ring member is securely held with an O-ring in the guide hole or around the main valve element.

In yet another preferable aspect, the O-ring is disposed on a side of the plate-like ring member remote from the valve chamber.

In yet another preferable aspect, the plate-like ring member has the tubular portion formed at the outer end of the plate-like ring member, and the plate-like ring member is securely fixed on the main valve element with the tubular portion adapted to be in sliding contact with the inner wall of the guide hole.

In yet another preferable aspect, the variable-capacity compressor control valve further includes an in-valve release passage provided in the valve body or the main valve element, the in-valve release passage being adapted to release a pressure Pc in the crank chamber to the suction chamber of the compressor via the Ps inlet/outlet port; and a sub valve element adapted to open or close the in-valve release passage.

### Advantageous Effects of Invention

According to the present invention, a plate-like ring member disposed between a guide hole and a main valve element can prevent intrusion of foreign matter into the sliding-surface gap (i.e., clearance) that is formed between the main valve element and the guide hole. In addition, the plate-like ring member can have suppressed frictional resistance and thus can have suppressed deformation (i.e., a suppressed amount of warp) in comparison with an O-ring that is disposed in the conventional control valve as a sealing member, for example. Thus, an increase in the sliding resistance and deterioration of the control properties associated therewith can be effectively suppressed.

Since the plate-like ring member is securely held in the guide hole of the valve body with an O-ring interposed therebetween, for example, the creep phenomenon of the plate-like ring member can be suppressed. This can also effectively suppress an increase in the sliding resistance and deterioration of the control properties associated therewith.

### Brief Description of Drawings

Fig. 1 is a longitudinal sectional view of a first embodiment of the variable-capacity compressor control valve according to the present invention in which a main valve element is in the open position.
Fig. 2 is a longitudinal sectional view of the first embodiment of the variable-capacity compressor control valve according to the present invention in which the main valve element is in the closed position.
Fig. 3 is an enlarged view of a portion A of Fig. 1.
Fig. 4 is an enlarged view of a portion A of Fig. 2.
Fig. 5A is a perspective view of a plate-like ring member (in a shaped state) used in the first embodiment of the variable-capacity compressor control valve according to the present invention.
Fig. 5B is a longitudinal sectional view of the plate-like ring member (in a shaped state) used in the first embodiment of the variable-capacity compressor control valve according to the present invention.
Fig. 6 is an enlarged view of another example of the first embodiment of the variable-capacity compressor control valve according to the present invention in which the main valve element is in the open position, which corresponds to the portion A of Fig. 1.
Fig. 7 is an enlarged view of another example of the first embodiment of the variable-capacity compressor control valve according to the present invention in which the main valve element is in the closed position, which corresponds to the portion A of Fig. 2.
Fig. 8 is a longitudinal sectional view of a second embodiment of the variable-capacity compressor control valve according to the present invention in which a main valve element is in the open position and a sub valve element is in the closed position (i.e., during the normal control time).
Fig. 9 is a longitudinal sectional view of the second embodiment of the variable-capacity compressor control valve according to the present invention in which the main valve element is in the closed position and the sub valve element is in the closed position (i.e., during the time of transition to compressor actuation (1)).
Fig. 10 is a longitudinal sectional view of the second embodiment of the variable-capacity compressor control valve according to the present invention in which the main valve element is in the closed position and the sub valve element is in the closed position (i.e., during the time of transition to compressor actuation (2)).
Fig. 11 is a longitudinal sectional view of the second embodiment of the variable-capacity compressor control valve according to the present invention in which the main valve element is in the closed position and the sub valve element is in the open position (i.e., during the compressor actuation time).
Fig. 12 is an enlarged view of a portion B of Fig. 8.
Fig. 13A is a perspective view of the sub valve element used in the second embodiment of the variable-capacity compressor control valve according to the present invention.
Fig. 13B is a front view of the sub valve element used in the second embodiment of the variable-capacity compressor control valve according to the present invention.
Fig. 13C is a left side view of the sub valve element used in the second embodiment of the variable-capacity compressor control valve according to the present invention.
Fig. 13D is a top view of the sub valve element used in the second embodiment of the variable-capacity compressor control valve according to the present invention.
Fig. 13E is a bottom view of the sub valve element used in the second embodiment of the variable-capacity compressor control valve according to the present invention.
Fig. 13F is a cross-sectional view of the sub valve element used in the second embodiment of the variable-capacity compressor control valve according to the present invention, taken in the direction of the arrow V-V in Fig. 13C.
Fig. 14 is a longitudinal sectional view of a third embodiment of the variable-capacity compressor control valve according to the present invention in which a main valve element is in the open position and a sub valve element is in the closed position (i.e., during the normal control time).
Fig. 15 is a longitudinal sectional view of the third embodiment of the variable-capacity compressor control valve according to the present invention in which the main valve element is in the closed position and the sub valve element is in the closed position (i.e., during the time of transition to compressor actuation).
Fig. 16 is a longitudinal sectional view of the third embodiment of the variable-capacity compressor control valve according to the present invention in which the main valve element is in the closed position and the sub valve element is in the open position (i.e., during the compressor actuation time).
Fig. 17 is an enlarged view of a portion C of Fig. 14.
Fig. 18 is an enlarged longitudinal sectional view of a main part of another example of the first embodiment of the variable-capacity compressor control valve according to the present invention.
Fig. 19 is an enlarged longitudinal sectional view of a main part of further another example of the first embodiment of the variable-capacity compressor control valve according to the present invention.
Fig. 20 is an enlarged longitudinal sectional view of a main part of still another example of the first embodiment of the variable-capacity compressor control valve according to the present invention.

### Description of Embodiments

Hereinafter, embodiments of the present invention will be described with reference to the drawings.

### <First embodiment

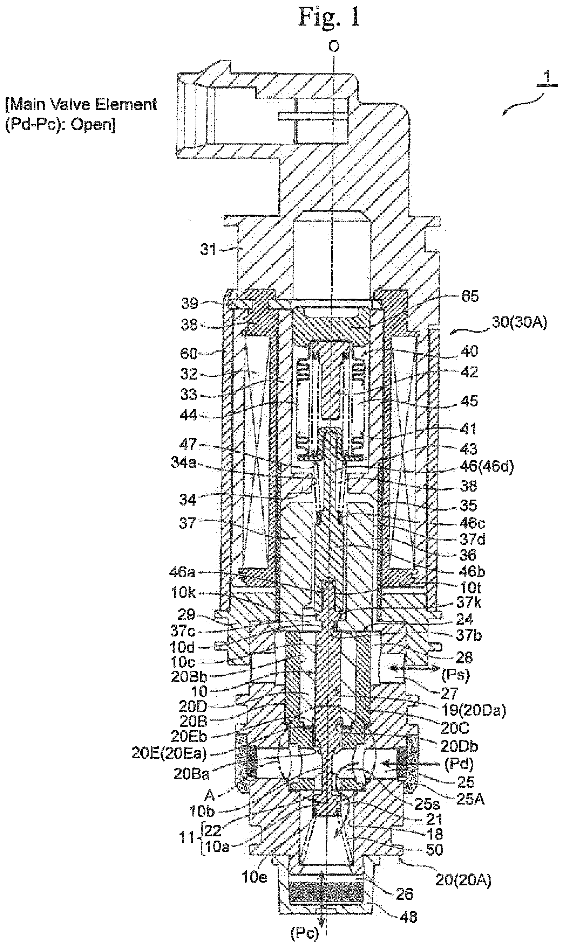

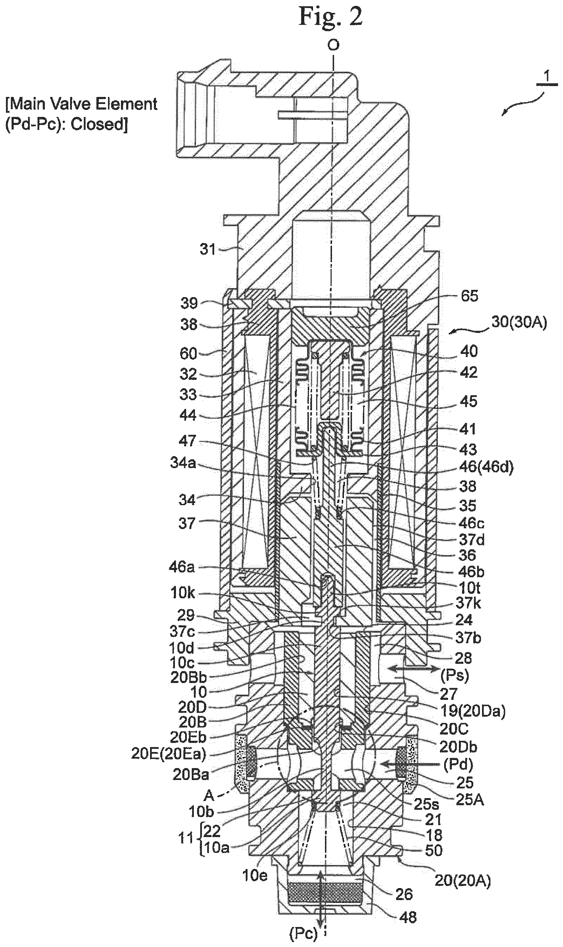

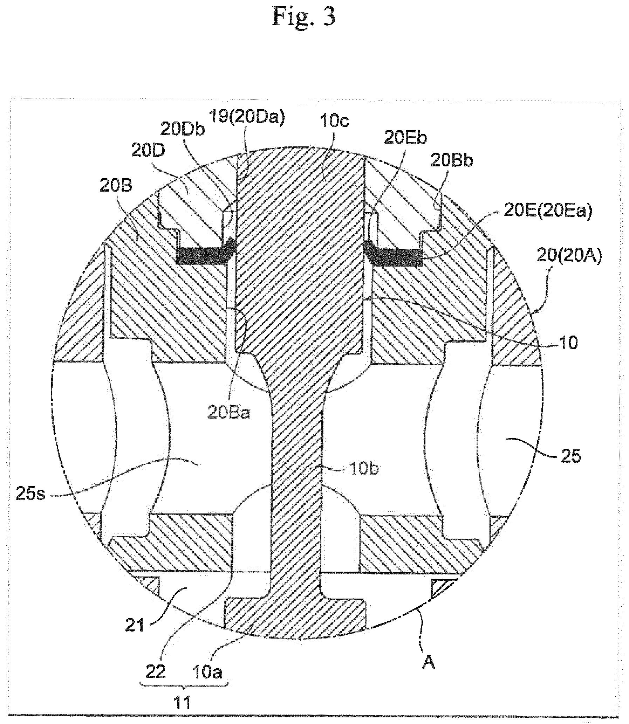

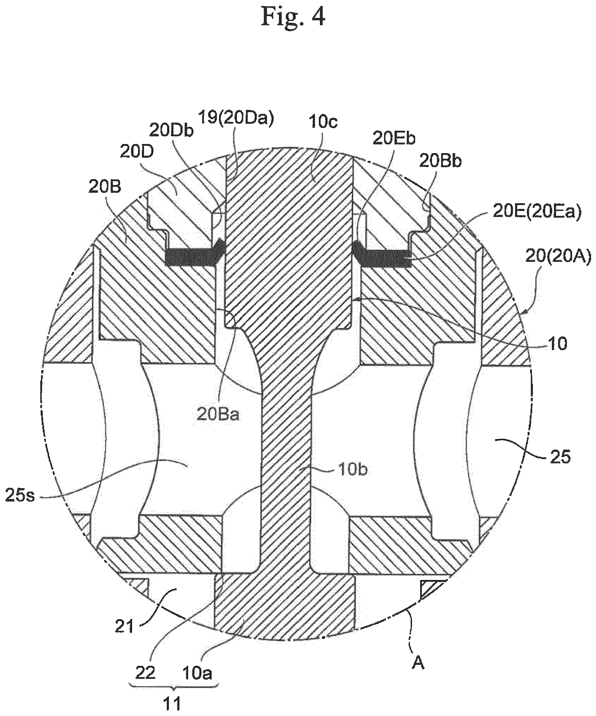

Fig. 1 and Fig. 2 are longitudinal sectional views each illustrating a first embodiment of the variable-capacity compressor control valve according to the present invention. Fig. 1 is a view in which a main valve element is in the open position, and Fig. 2 is a view in which the main valve element is in the closed position. Fig. 3 and Fig. 4 are enlarged views of portions A of Fig. 1 and Fig. 2, respectively.

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the invention and also for the sake of convenience to create the drawing.

### [Configuration of control valve 1]

A control valve 1 of the embodiment illustrated in the drawings basically includes a valve body 20 with a valve orifice 22, a main valve element 10 for opening or closing the valve orifice 22, an electromagnetic actuator 30 for moving the main valve element 10 in the direction to open or close the valve orifice (i.e., in the vertical direction), and a bellows device 40 serving as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 60 externally arranged around the coil 32, a connector head 31 attached to the upper side of the housing 60 with interposed therebetween an attachment plate 39 disposed above the bobbin 38, and a holder 29 disposed between the lower end of the housing 60 and the lower end of the guide pipe 35 and adapted to fix them to the upper portion of the valve body 20 (or a body member 20A thereof). In this example, the short cylindrical attractor 34 with an insertion through-hole 34a formed in the center (along the axis O) thereof, which has a smaller diameter than the inside diameter of the stator 33, is integrally molded with the inner periphery of the lower portion of the cylindrical stator 33. Herein, a portion of the electromagnetic actuator 30 including the coil 32, the stator 33, the attractor 34, and the like and excluding the plunger 37 is referred to as a "solenoid portion 30A."

A short columnar stator 65 is securely attached to the upper portion of the stator 33 by press fitting, for example, and a pressure-sensitive chamber 45, which is adapted to receive a suction pressure Ps in a compressor, is formed between the stator 65 and the attractor 34 on the inner periphery side of the stator 33. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. The pushrod 46 includes an upper small-diameter portion 46d and a lower large-diameter portion 46b. The upper small-diameter portion 46d of the pushrod 46 is fitted and inserted into the recess portion of the lower stopper 43 and thus is supported therein, and is inserted through the insertion through-hole 34a of the attractor 34. Meanwhile, the lower large-diameter portion 46b of the pushrod 46 is inserted through the plunger 37 with an inside diameter approximately equal to the diameter of the insertion through-hole 34a of the attractor 34 (with a small gap therebetween). In addition, an upper-end small-diameter projecting portion 10t (described below) of the main valve element 10 is fitted into a recess hole 46a, which is relatively vertically long, provided at the lower end of the lower large-diameter portion 46b.

In addition, a plunger spring (i.e., a valve-opening spring) 47, which is a compression coil spring in an inverted cone shape adapted to urge the pushrod 46, the main valve element 10, and the plunger 37 (via a flanged latch portion 10k of the main valve element 10) downward (i.e., in the direction to open the valve), is provided in a compressed state between a step portion (i.e., an upward facing annular terrace face) 46c, which is formed between the upper small-diameter portion 46d and the lower large-diameter portion 46b of the pushrod 46, and the lower stopper 43 (or the lower face thereof) such that the plunger spring 47 is externally arranged around the upper small-diameter portion 46d of the pushrod 46. With the plunger spring 47 (or the compression force thereof), the pushrod 46, the main valve element 10, and the plunger 37 move together in the vertical direction while the pushrod 46 and the like are urged downward, and the bellows device 40 is held within the pressure-sensitive chamber 45.

The bottom of the plunger 37 has formed in the center thereof (i.e., along the axis O) a central hole 37b with a smaller diameter than the inside diameter of the plunger 37, and also has an insertion hole 37c with an approximately equal diameter to the inside diameter of the plunger 37 (i.e., with a larger diameter than that of the central hole 37b) at a position slightly eccentric with respect to the center such that the insertion hole 37c partially overlaps the central hole 37b. The insertion hole 37c is drilled down to the depth (i.e., the depth in the vertical direction) communicating with the internal space of the plunger 37. The diameter of the insertion hole 37c (i.e., the inside diameter of the plunger 37) is set slightly larger than that of the flanged latch portion 10k of the main valve element 10 described below, and the diameter of the central hole 37b is set slightly larger than that of an upper small-diameter portion 10d of the main valve element 10 and slightly smaller than that of the flanged latch portion 10k. In addition, the thickness (i.e., the height in the vertical direction) of the bottom of the plunger 37 is set slightly larger than the height of the upper small-diameter portion 10d of the main valve element 10. In a state in which the upper-end small-diameter projecting portion 10t of the main valve element 10 is fitted into the recess hole 46a of the pushrod 46, and the upper small-diameter portion 10d of the main valve element 10 is inserted through the central hole 37b of the plunger 37, the outer periphery portion of the central hole 37b at the upper face of the bottom of the plunger 37 serves as an inner flanged latch portion 37k to which the flanged latch portion 10k of the main valve element 10 is adapted to be latched.

In this example, a D-cut surface 37d is formed in a predetermined position on the outer periphery of the plunger 37, and a gap 36 is formed between the outer periphery of the plunger 37 (or the D-cut surface 37d thereof) and the guide pipe 35. Instead of the D-cut surface 37d, one or more vertical holes may be formed to form the gap 36 between the outer periphery of the plunger 37 and the guide pipe 35.

The main valve element 10 is made of metal, for example, and is formed of a solid member with a stepped shaft shape arranged along the axis O. The main valve element 10 includes, arranged in order from to the bottom, a main valve element portion 10a with a relatively large diameter, a lower small-diameter portion 10b, an intermediate fit-inserted portion 10c that is vertically long, the upper small-diameter portion 10d, and the flanged latch portion 10k. The upper-end small-diameter projecting portion 10t, which is adapted to be fitted and inserted into the recess hole 46a of the pushrod 46, is provided in a protruding manner on the upper face of the flanged latch portion 10k.

As described above, the upper-end small-diameter projecting portion 10t of the main valve element 10 is fitted into the recess hole 46a of the pushrod 46, and the diameter of the flanged latch portion 10k of the main valve element 10 is set larger than that of the recess hole 46a (and slightly smaller than that of the lower large-diameter portion 46b).

In addition, the upper small-diameter portion 10d of the main valve element 10 is loosely fitted in the central hole 37b of the plunger 37, and the diameter of the flanged latch portion 10k of the main valve element 10 is set larger than that of the central hole 37b (and smaller than the inside diameter of the plunger 37). When the plunger 37 is moved upward, the flanged latch portion 10k is latched to the inner flanged latch portion 37k formed of the outer periphery portion of the central hole 37b and thus, latching is achieved and slippage is prevented. This allows the plunger 37, the main valve element 10, and the pushrod 46 to ascend together (or integrally).

When the main valve element 10 and the plunger 37 are attached together, for example, the upper-end small-diameter projecting portion 10t, the flanged latch portion 10k, and the upper small-diameter portion 10d of the main valve element 10, which has been attached to the valve body 20 (or a guide hole 19 therein) in advance, is inserted through the insertion hole 37c of the plunger 37 from the bottom side, and then the main valve element 10 is moved horizontally with respect to the plunger 37 so that the upper small-diameter portion 10d of the main valve element 10 is fitted and inserted into the central hole 37b provided in the center of the bottom of the plunger 37. Then, the pushrod 46 may be inserted into the plunger 37 (or the inside thereof) from the top side, and the upper-end small-diameter projecting portion 10t of the main valve element 10 may be fitted into the recess hole 46a of the pushrod 46.

Meanwhile, the valve body 20 includes a stepped cylindrical body member 20A having a fit recess hole 20C in the center of the upper portion thereof and also having a housing hole 18, which is continuous with the fit recess hole 20C and has a slightly smaller diameter than that of the fit recess hole 20C, in the center of the lower portion thereof; a cylindrical seat member 20B that is securely inserted into the recess hole 20C by press fitting, for example; and a cylindrical guide member 20D that is securely inserted into the seat member 20B (or the upper half portion thereof) by press fitting, for example.

Each of the seat member 20B and the guide member 20D is produced from stainless steel (SUS) or a high-hardness brass material (e.g., brass that is made to contain a small amount of lead so as to have high hardness), for example. The upper half portion of a central hole 20Ba of the seat member 20B has a large diameter (i.e., a large-diameter hole 20Bb), and the guide member 20D is fitted into the large-diameter hole 20Bb of the seat member 20B in a state in which the upper end faces of the seat member 20B and the guide member 20D are substantially aligned with each other. Regarding the seat member 20B and the guide member 20D, the lower end of the seat member 20B is made to abut a step portion (i.e., a terrace portion) between the recess hole 20C and the housing hole 18 of the body member 20A. In addition, the seat member 20B and the guide member 20D are fitted and inserted into the recess hole 20C such that their upper ends protrude upward from the recess hole 20C. The upper ends of the seat member 20B and the guide member 20D form a stopper portion 24 for defining the lowest position of the plunger 37 (i.e., for regulating the descending operation of the plunger 37). The guide hole 19 in which the main valve element 10 (or the intermediate fit-inserted portion 10c thereof) is adapted to be fitted and inserted is formed by the central hole 20Ba of the seat member 20B (specifically, the lower half portion thereof located below the large-diameter hole 20Bb) and the central hole 20Da of the guide member 20D. The lower end of the guide hole 19 (i.e., the lower end of the central hole 20Ba of the seat member 20B) serves as the valve orifice 22 (i.e., a valve seat portion) that is opened or closed by the main valve element portion 10a of the main valve element 10. In this example, the diameter of the central hole 20Ba of the seat member 20B is set slightly larger than that of the central hole 20Da of the guide member 20D so that the main valve element 10 (or the intermediate fit-inserted portion 10c thereof) is slidably fitted and inserted through the central hole 20Da of the guide member 20D and is also inserted through the central hole 20Ba (i.e., a large-diameter portion thereof on the side of a valve chamber 21 below a plate-like ring member 20E described below) of the seat member 20B, with a small gap therebetween (see Figs. 3 and 4). Herein, the main valve element portion 10a and the valve orifice 22 form a main valve unit 11.

It should be noted that the outside diameter of the seat member 20B is set smaller than that of the plunger 37.

In this example, the plate-like ring member (also referred to as a packing) 20E, which is made of fluorocarbon resin, such as Teflon (registered trademark), for example, and thus is slightly elastically deformable and has low frictional resistance (i.e., sliding resistance), is held in a compressed state between the guide member 20D (or the lower end face thereof) and the seat member 20B (or an upward facing terrace face formed between the central hole 20Ba and the large-diameter hole 20Bb thereof) forming the guide hole 19. In addition, the inner end of the plate-like ring member 20E is adapted to be in sliding contact with the outer wall (or the outer periphery) of the main valve element 10 (or the intermediate fit-inserted portion 10c thereof). It should be noted that the material of the plate-like ring member 20E is not limited to those described above, and metal, such as SUS, can also be used.

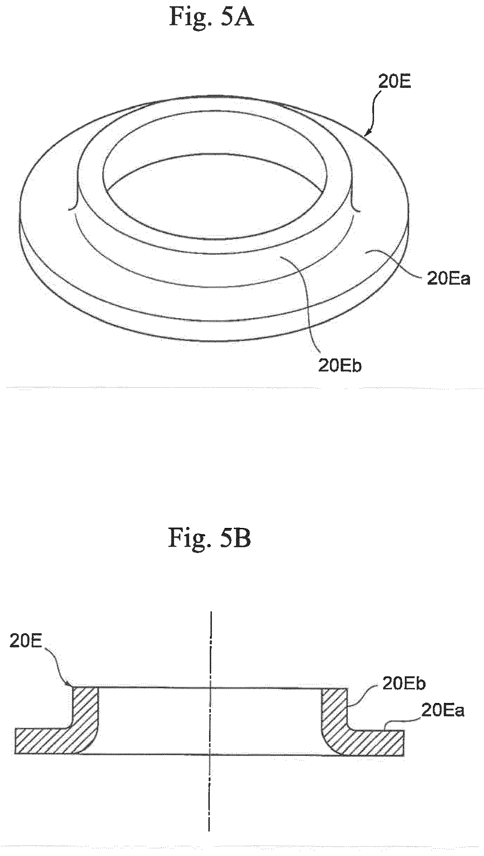

Specifically, the plate-like ring member 20E includes, as clearly understood by referring to Fig. 1 and Fig. 2 in conjunction with Fig. 3 to Figs. 5A and 5B, an annular flat-plate-like portion 20Ea held in a state compressed from its opposite sides in the vertical direction by the guide member 20D and the seat member 20B forming the guide hole 19, and a tubular portion 20Eb with an approximately cylindrical or circular truncated cone shape that is continuous with the inner end of the flat-plate-like portion 20Ea while facing upward (i.e., toward the guide member 20D) and is adapted to abut the outer wall of the main valve element 10 (or the intermediate fit-inserted portion 10c thereof). In the shaped state (i.e., plastically deformed state), the inside diameter of the tubular portion 20Eb of the plate-like ring member 20E is approximately equal to (or slightly smaller than) the outside diameter of the main valve element 10 (or the intermediate fit-inserted portion 10c thereof). It should be noted that the tubular portion 20Eb of the plate-like ring member 20E may be formed as a result of the plate-like ring member 20E having been incorporated into the control valve 1 or after it is incorporated into the control valve 1. Specifically, the plate-like ring member 20E, which is flat and has a central hole with a diameter smaller than the outside diameter of the main valve element 10, is prepared, and the flat plate-like ring member 20E is held in a state compressed from its opposite sides in the vertical direction by the guide member 20D and the seat member 20B so that the main valve element 10 is inserted through the guide hole 19. Accordingly, a portion around the central hole of the plate-like ring member 20E (i.e., an end on the inner periphery side of the plate-like ring member 20E) undergoes plastic deformation and thus is shaped into the tubular portion 20Eb. According to such a shaping method, constant sealing performance can be achieved irrespective of the dimension errors of the plate-like ring member 20E and/or the main valve element 10. When the plate-like ring member 20E is formed of a material, such as fluorocarbon resin, that exhibits higher thermoplasticity than metal, shaping the tubular portion 20Eb using the main valve element 10 at a high-temperature environment can reduce the time required for plastic deformation.

The gap between the valve chamber 21 (or Pd introduction ports 25 described below) and the pressure-sensitive chamber 45 (or Ps inlet/outlet ports 27 described below) (i.e., a sliding-surface gap formed between the main valve element 10 and the guide hole 19) is sealed by the plate-like ring member 20E that is securely held between the guide hole 19 and the main valve element 10.

It should be noted that the lower end of the central hole 20Da of the guide member 20D has formed therein a larger-diameter portion 20Db for avoiding interference with the tubular portion 20Eb of the plate-like ring member 20E.

The body member 20A is produced from a material, such as aluminum, brass, or resin, for example. In a state in which the seat member 20B and the like are inserted into the recess hole 20C of the body member 20A, a Ps inlet/outlet chamber 28 for the suction pressure Ps in the compressor is formed around the outer periphery of the upper portion of the seat member 20B, and a plurality of (two in the illustrated drawing) Ps inlet/outlet ports 27 are formed on the outer periphery side of the Ps inlet/outlet chamber 28. The suction pressure Ps introduced into the Ps inlet/outlet chamber 28 through the Ps inlet/outlet ports 27 is introduced into the pressure-sensitive chamber 45 via the gap 36 formed between the outer periphery of the plunger 37 and the guide pipe 35 (i.e., the gap formed by the D-cut surface 37d in this example), a gap 38 formed between the outer periphery of the pushrod 46 and the attractor 34, and the like.

In addition, the housing hole 18, which has a larger diameter than those of the guide hole 19 and the main valve element portion 10a of the main valve element 10, for housing the main valve element portion 10a is provided continuously with the center of the bottom of the recess hole 20C of the body member 20A. A valve-closing spring 50, which is a conical compression coil spring, is provided in a compressed state between the corner of the outer periphery of the bottom of the housing hole 18 and a step portion (i.e., a terrace face) 10e provided on the outer periphery of the lower portion of the main valve element portion 10a of the main valve element 10. Thus, the main valve element 10 is urged upward with the urging force of the valve-closing spring 50. Herein, the inside of the housing hole 18 (i.e., a portion of the seat member 20B below the valve orifice 22) is the valve chamber 21.

The plurality of Pd introduction ports 25 communicating with a discharge chamber of the compressor are provided in the recess hole 20C, and a ring-like filter member 25A is disposed around the outer periphery of the Pd introduction ports 25. In addition, a plurality of horizontal holes 25s communicating with the Pd introduction ports 25 and continuous with the central hole 20Ba (i.e., the guide hole 19) are provided in the lower portion of the seat member 20B (in particular, at positions below a portion of the seat member 20B in which the intermediate fit-inserted portion 10c of the main valve element 10 is inserted) that is inserted in the recess hole 20C.

In addition, the lower end of the body member 20A has a lid-like member 48, which functions as a filter, fixed thereto by engagement or press fitting, for example. A Pc inlet/outlet chamber (inlet/outlet port) 26, which communicates with a crank chamber of the compressor, is provided above the lid-like member 48 and below the housing hole 18 (i.e., within the body member 20A on the lower end side of the seat member 20B). The Pc inlet/outlet chamber (inlet/outlet port) 26 communicates with the Pd introduction ports 25 via the valve chamber 21 → the gap between the valve orifice 22 and the main valve element portion 10a → the gap between the lower portion of the guide hole 19 and the lower small-diameter portion 10b → the horizontal holes 25s.

### [Operation of control valve 1]

Next, the operation of the control valve 1 with the aforementioned configuration will be briefly described.

When the solenoid portion 30A including the coil 32, the stator 33, the attractor 34, and the like is supplied with current and thus is energized in the open-valve state illustrated in Fig. 1, the plunger 37 is attracted (upward) by the attractor 34, and following the movement of the plunger 37, the flanged latch portion 10k of the main valve element 10 is latched to the inner flanged latch portion 37k of the plunger 37 so that the main valve element 10 is moved upward (i.e., in the direction to close the valve) (against the urging force of the plunger spring (i.e., valve-opening spring) 47), and thus, the valve orifice 22 is closed by the main valve element portion 10a of the main valve element 10 (i.e., the closed-valve state illustrated in Fig. 2). Meanwhile, the suction pressure Ps introduced from the compressor through the Ps inlet/outlet ports 27 is introduced into the pressure-sensitive chamber 45 through the Ps inlet/outlet chamber 28 via the gap 36 between the outer periphery of the plunger 37 and the guide pipe 35, and the like, and the bellows device 40 (i.e., the inside thereof is at a vacuum pressure) is expansively or contractively displaced in accordance with the pressure (i.e., the suction pressure Ps) in the pressure-sensitive chamber 45 (i.e., contracts if the suction pressure Ps is high and expands if it is low), and the displacement is then transmitted to the main valve element 10 via the pushrod 46, whereby the valve opening degree (i.e., the clearance between the valve orifice 22 and the main valve element portion 10a) is regulated, and the crank chamber pressure Pc is controlled in accordance with the valve opening degree.

As described above, in the control valve 1 of the first embodiment, the plate-like ring member 20E disposed between the guide hole 19 and the main valve element 10 can prevent intrusion of foreign matter into the sliding-surface gap (i.e., clearance) that is formed between the main valve element 10 and the guide hole 19. In addition, the plate-like ring member 20E can have suppressed frictional resistance (or improved sliding properties) and thus can have suppressed deformation (i.e., a suppressed amount of warp) in comparison with an O-ring that is disposed in the conventional control valve as a sealing member, for example. Thus, an increase in the sliding resistance and deterioration of the control properties associated therewith can be effectively suppressed.

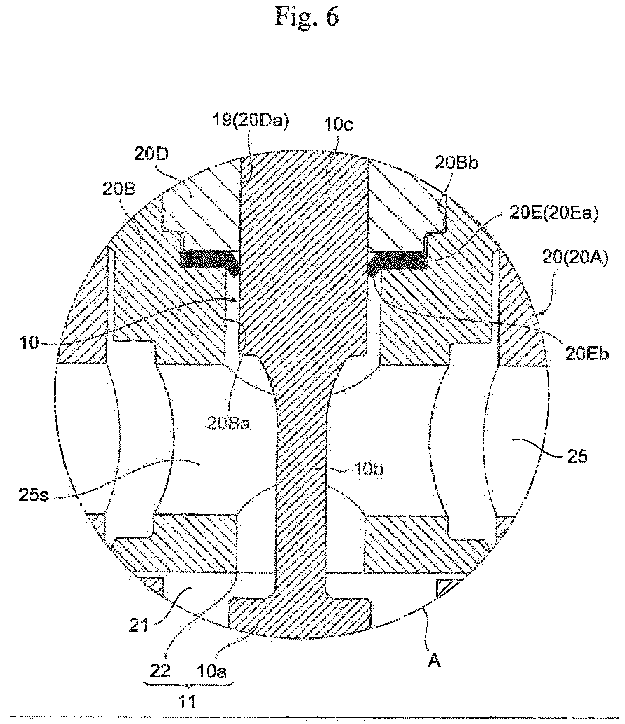

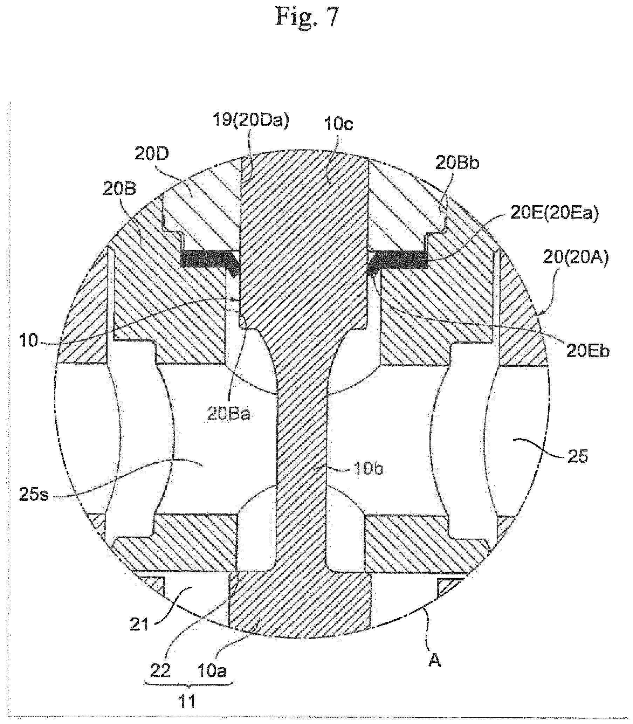

In the aforementioned first embodiment, the tubular portion 20Eb of the plate-like ring member 20E is formed such that it faces upward (i.e., the side of the guide member 20D and the side of the pressure-sensitive chamber 45 or the Ps inlet/outlet ports 27 in the sliding-surface gap formed between the main valve element 10 and the guide hole 19) from the inner end of the flat-plate-like portion 20Ea. However, as illustrated in Fig. 6 and Fig. 7, for example, the tubular portion 20Eb may be formed such that it faces downward (i.e., the side of the seat member 20B and the side of the valve chamber 21 or the Pd introduction ports 25 in the sliding-surface gap formed between the main valve element 10 and the guide hole 19) from the inner end of the flat-plate-like portion 20Ea. Since the valve chamber 21 (or the Pd introduction ports 25) has higher pressure than the pressure-sensitive chamber 45 (or the Ps inlet/outlet ports 27), the pressure of a fluid acts so as to allow the inner end of the plate-like ring member 20E to be in close contact with the counterpart face (i.e., the outer peripheral face of the main valve element 10) as long as the inner end (or the tubular portion 20Eb) of the plate-like ring member 20E is curved on the higher pressure side (that is, the side of the valve chamber 21 and the Pd introduction ports 25). Thus, further higher sealing properties can be secured during operation.

### <Second embodiment>

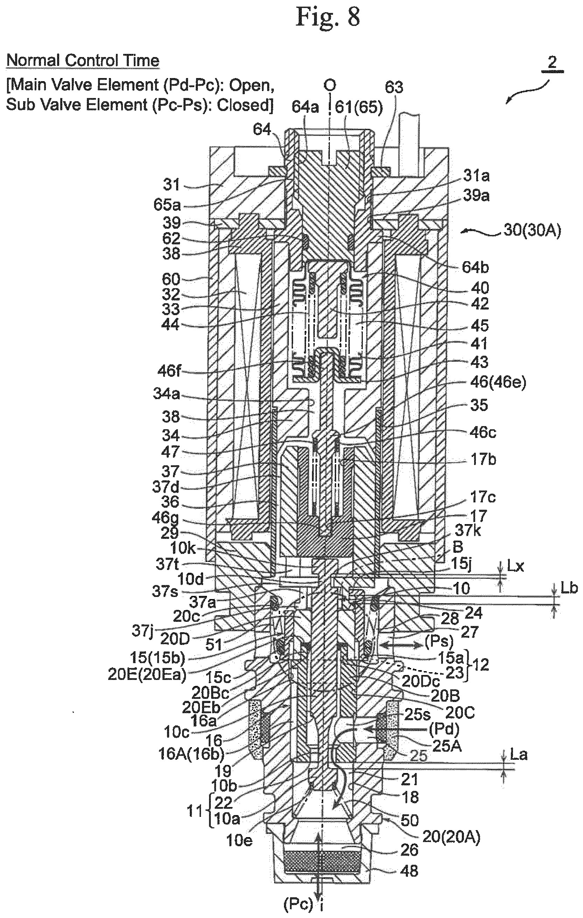

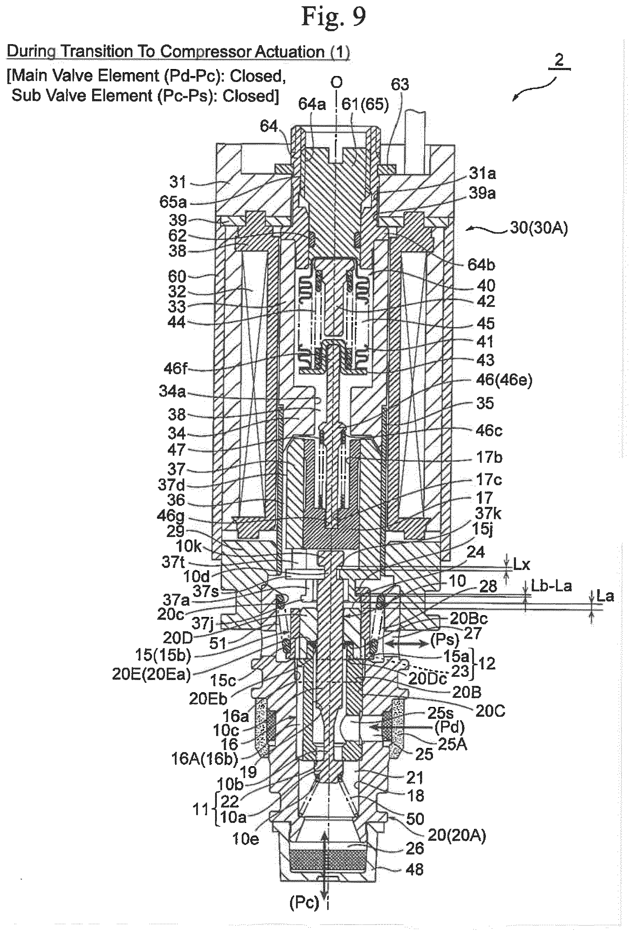

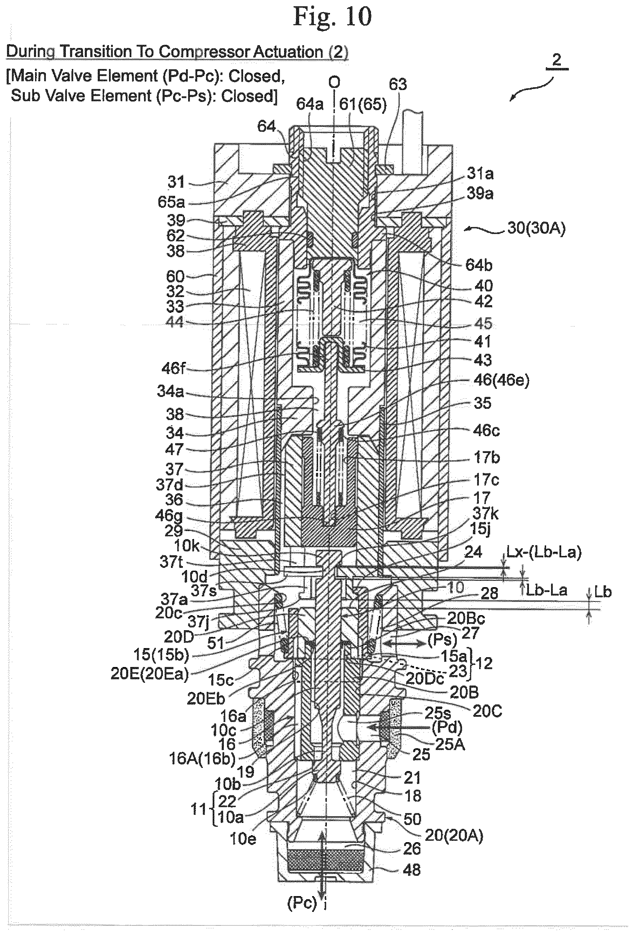

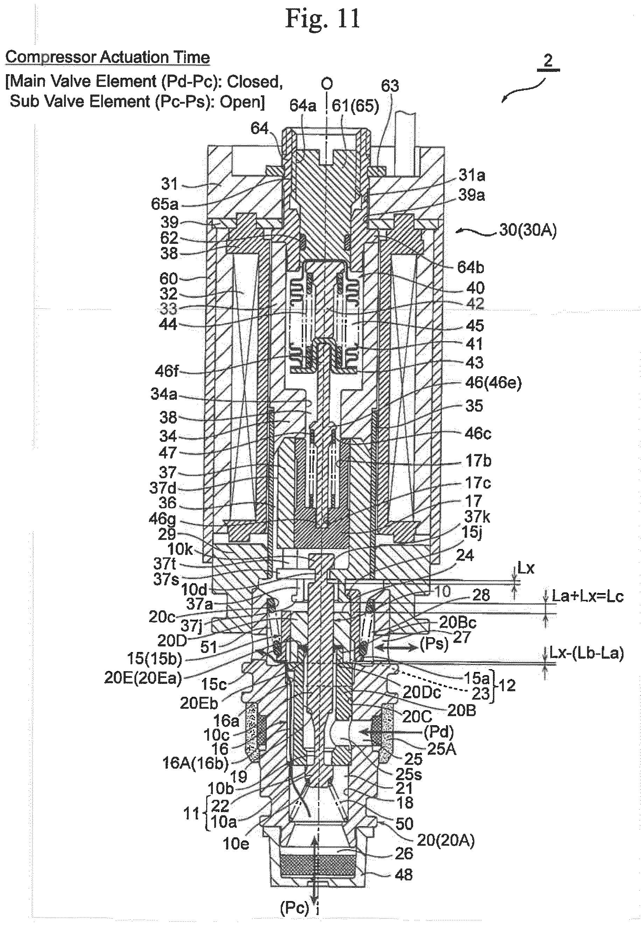

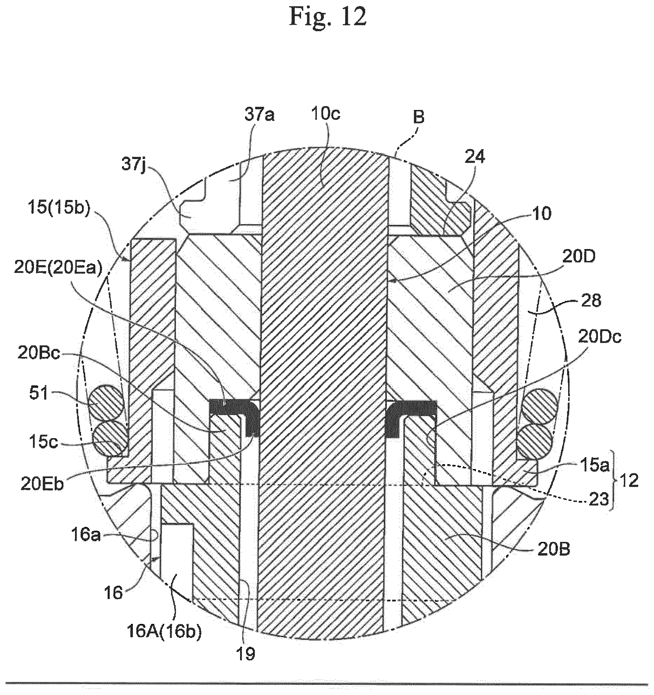

Fig. 8 to Fig. 11 are longitudinal sectional views of a second embodiment of the variable-capacity compressor control valve according to the present invention. Specifically, Fig. 8 illustrates a state in which a main valve element is in the open position and a sub valve element is in the closed position (i.e., during the normal control time), Fig. 9 and Fig. 10 illustrate a state in which the main valve element is in the closed position and the sub valve element is in the closed position (i.e., during the time of transition to compressor actuation), and Fig. 11 illustrates a state in which the main valve element is in the closed position and the sub valve element is in the open position (i.e., during the compressor actuation time). Fig. 12 is an enlarged view of a portion B of Fig. 8.

The control valve 2 of the second embodiment is obtained by providing the valve body 20 of the control valve 1 of the aforementioned first embodiment with an in-valve release passage 16 for releasing the crank chamber pressure Pc to the suction chamber of the compressor via the Ps inlet/outlet ports 27 so as to improve the actuation properties. It should be noted that portions having the same configurations and operational advantages as those of the control valve 1 of the first embodiment are denoted by the same reference numerals.

### [Configuration of control valve 2]

The control valve 2 of the embodiment illustrated in the drawings basically includes a valve body 20 with a valve orifice 22, a main valve element 10 for opening or closing the valve orifice 22, an electromagnetic actuator 30 for moving the main valve element 10 in the direction to open or close the valve orifice (i.e., in the vertical direction), and a bellows device 40 serving as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 60 externally arranged around the coil 32, a connector portion 31 attached to the upper side of the housing 60 with interposed therebetween an attachment plate 39 disposed above the bobbin 38, and a holder 29 disposed between the lower end of the housing 60 and the lower end of the guide pipe 35 and adapted to fix them to the upper portion of the valve body 20 (or a body member 20A thereof). In this example, the cylindrical attractor 34 with an insertion through-hole 34a, which is formed in the center thereof (along the axis O) and has a smaller diameter than the inside diameter of the stator 33, is integrally molded with the inner periphery of the lower portion of the cylindrical stator 33. Herein, a portion of the electromagnetic actuator 30 including the coil 32, the stator 33, the attractor 34, and the like and excluding the plunger 37 is referred to as a "solenoid portion 30A."

The upper portion of the stator 33 is provided with an adjustment member 61 obtained by screwing an external thread portion 65a, which is formed on the outer periphery of an adjustment screw 65 with a hexagon socket, into an internal thread portion 64a formed on the inner periphery of a cylindrical holding member 64. In such an adjustment member 61, the lower half portion of the adjustment screw 65 is fitted into the lower half portion of the holding member 64 (with an O-ring 62 as a sealing member interposed therebetween), and the external thread portion 65a provided on the outer periphery of the upper portion of the adjustment screw 65 is screwed into the internal thread portion 64a provided on the inner periphery of the upper portion of the holding member 64. The adjustment member 61 is inserted through a fit-insertion hole 31a that penetrates through substantially the center of the connector portion 31 and through a central hole 39a that is provided in substantially the center of the attachment plate 39. Thus, a flange portion 64b, which is provided in a protruding manner on the outer periphery of the lower portion of the holding member 64, and a ring-shaped pressing member 63, which is fitted in the outer periphery of the upper portion (or a fitting groove formed therein) of the holding member 64, are securely held in a cooperative manner on the connector portion 31 and the attachment plate 39 (vertically immovably), and the lower end of the holding member 64 (i.e., a portion thereof below the flange portion 64b) is arranged (inserted) on the inner periphery side of the upper end of the stator 33.

A pressure-sensitive chamber 45, which is adapted to receive a suction pressure Ps in a compressor, is formed between the adjustment member 61 (i.e., the adjustment screw 65 and the holding member 64) and the attractor 34 on the inner periphery side of the stator 33. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. A portion around the center of the pushrod 46 has a large diameter (i.e., a large-diameter portion 46e). An upper end 46f of the pushrod 46 is fitted and inserted into the recess portion of the lower stopper 43 and thus is supported therein, while the upper portion and the large-diameter portion 46e of the pushrod 46 are inserted through the insertion through-hole 34a of the attractor 34 (with a small gap 38 therebetween). The lower portion of the pushrod 46 is inserted into a recess hole 17b of an interior member 17 with a recessed cross-section described below, and the lower end 46g thereof is fitted into a recessed fit-insertion hole 17c formed in the center of the bottom of the recess hole 17b.

The interior member 17 with the recessed cross-section, which has the vertically long recess hole 17b with an approximately equal diameter to that of the insertion through-hole 34a of the attractor 34, is securely inserted into the plunger 37 by press fitting, for example. The interior member 17 is fitted into the plunger 37 such that the upper end of the interior member 17 is aligned with the upper end of the plunger 37 (i.e., the upper end of the interior member 17 is positioned with respect to the inner periphery of the upper end of the plunger 37), while the lower end of the interior member 17 is spaced apart from the bottom of the plunger 37 (with a gap that allows the flanged latch portion 10k of the main valve element 10 to slightly move vertically, which will be described in detail later). The recessed fit-insertion hole 17c, which is adapted to have the lower end 46g of the pushrod 46 fitted and inserted therein, is formed in the center of the bottom of the recess hole 17b of the interior member 17.

In addition, a plunger spring (i.e., a valve-opening spring) 47, which is a cylindrical compression coil spring, is provided in a compressed state between a step portion (i.e., an annular terrace face facing downward) formed on the upper portion of the large-diameter portion 46e of the pushrod 46 and the bottom of the recess hole 17b (i.e., a face thereof facing upward around the fit-insertion hole 17c) of the interior member 17 fitted in the plunger 37. With the plunger spring 47 (or the compression force thereof), the plunger 37 is urged downward (i.e., in the direction to open the valve) via the interior member 17, and the bellows device 40 is held within the pressure-sensitive chamber 45 via the pushrod 46.

The plunger 37 has formed at its bottom a slit 37s that extends linearly from the outer periphery thereof to the center (on the axis O) and has a cutout 37t, which is wider than the slit 37s, in the side of the plunger 37 at a position corresponding to the slit 37s. The height (in the vertical direction) of the cutout 37t is set slightly larger than the height of the flanged latch portion 10k of the main valve element 10, and the height (in the vertical direction) of the slit 37s (i.e., the thickness (or the height in the vertical direction) of the bottom of the plunger 37) is set slightly smaller than the height of the upper small-diameter portion 10d of the main valve element 10 so that the main valve element 10 is vertically movable with respect to the plunger 37 (this will be described in detail later). In addition, the width (in the circumferential direction) of the cutout 37t is set slightly larger than the outside diameter of the flanged latch portion 10k of the main valve element 10, and the width (in the horizontal direction) of the slit 37s is set slightly larger than the outside diameter of the upper small-diameter portion 10d of the main valve element 10 and smaller than the outside diameter of the flanged latch portion 10k of the main valve element 10, taking into consideration the assembly property and the like. The outer periphery portion of the slit 37s at the upper face of the bottom of the plunger 37 serves as an inner flanged latch portion 37k to which the flanged latch portion 10k of the main valve element 10 is adapted to be latched.

Further, a tubular leg portion 37a with an approximately C-shape as seen in plan view, which has a cutout portion at a position corresponding to the slit 37s (specifically, a portion of the tubular leg portion 37a that is wider than the outside diameter of the intermediate fit-inserted portion 10c of the main valve element 10 has been cut out), is provided in a (downwardly) protruding manner on the lower face of the plunger 37. The tubular leg portion 37a is externally arranged around the intermediate fit-inserted portion 10c (or the upper end thereof) of the main valve element 10 (with a small gap therebetween), and an outer flanged latch portion 37j to which a flanged latch portion 15j of a sub valve element 15 described below is adapted to be latched is provided in an (outwardly) protruding manner at the lower end of the tubular leg portion 37a.

In this example, a D-cut surface 37d is formed in a predetermined position on the outer periphery of the plunger 37 (i.e., on the side where the cutout 37t and the slit 37s are formed in the example illustrated in the drawing), and a gap 36 is formed between the outer periphery of the plunger 37 (or the D-cut surface 37d thereof) and the guide pipe 35. Instead of the D-cut surface 37d of the plunger 37, one or more vertical grooves may be formed to form the gap 36 between the outer periphery of the plunger 37 and the guide pipe 35.

The main valve element 10 is made of metal, for example, and is formed of a solid member with a stepped shaft shape arranged along the axis O. The main valve element 10 includes, arranged in order from to the bottom, a main valve element portion 10a with a relatively large diameter, a lower small-diameter portion 10b, an intermediate fit-inserted portion 10c that is vertically long, the upper small-diameter portion 10d, and the flanged latch portion 10k.

As described above, the intermediate fit-inserted portion 10c (or its upper end protruding upward from the guide hole 19) of the main valve element 10 is inserted in the tubular leg portion 37a provided on the lower face of the plunger 37, the upper small-diameter portion 10d is loosely fitted in the slit 37s, and the flanged latch portion 10k is loosely fitted on the inner side of the plunger 37 below the interior member 17 (i.e., in a space between the bottom of the plunger 37 and the lower end of the interior member 17). The flanged latch portion 10k has a larger diameter than the width of the slit 37s so that when the plunger 37 is moved upward with respect to the main valve element 10, the inner flanged latch portion 37k made of the outer periphery portion of the slit 37s is latched to the flanged latch portion 10k, and thus, latching is achieved and slippage is prevented. In addition, the intermediate fit-inserted portion 10c also has a larger diameter than the width of the slit 37s so that the outer periphery portion of the slit 37s at the lower face of the plunger 37 is allowed to face and contact the step portion between the intermediate fit-inserted portion 10c and the upper small-diameter portion 10d of the main valve element 10.

Meanwhile, the valve body 20 mainly includes a stepped cylindrical body member 20A having a fit recess hole 20C, which is vertically long, in the center of the upper portion thereof and also having a housing hole 18, which is continuous with the recess hole 20C and has a slightly smaller diameter than that of the recess hole 20C, in the center of the lower portion thereof; a cylindrical seat member 20B that is securely inserted into the recess hole 20C by press fitting, for example; and a short cylindrical guide member 20D that is securely disposed on the seat member 20B (or the upper side thereof) and has an approximately equal outside diameter to that of the seat member 20B.

Each of the seat member 20B and the guide member 20D is produced from stainless steel (SUS) or a high-hardness brass material (e.g., brass that is made to contain a small amount of lead so as to have high hardness), for example. A (cylindrical) fit projecting portion 20Bc provided in a protruding manner on the center of the upper face of the seat member 20B is securely inserted into a fit recess portion 20Dc provided in the center of the lower face of the guide member 20D by press fitting, for example, so that the seat member 20B and the guide member 20D are integrated. The seat member 20B is fitted and inserted into the recess hole 20C with its lower end abutting a step portion (i.e., a terrace portion) between the recess hole 20C and the housing hole 18 of the body member 20A. The upper end of the guide member 20D that is securely fixed on the seat member 20B while protruding upward from the recess hole 20C serves as a stopper portion 24 for defining the lowest position of the plunger 37 (i.e., for regulating the descending operation of the plunger 37). The guide hole 19 in which the intermediate fit-inserted portion 10c of the main valve element 10 is adapted to be fitted and inserted is formed by the central hole 20Ba of the seat member 20B and the central hole 20Da of the guide member 20D. The lower end of the guide hole 19 (i.e., the lower end of the central hole 20Ba of the seat member 20B) serves as a valve orifice 22 (i.e., a valve seat portion) that is opened or closed by the main valve element portion 10a of the main valve element 10. In this example, the diameter of the central hole 20Ba of the seat member 20B is set slightly larger than that of the central hole 20Da of the guide member 20D so that the intermediate fit-inserted portion 10c of the main valve element 10 is slidably fitted and inserted through the central hole 20Da of the upper guide member 20D and is also inserted through the central hole 20Ba of the lower seat member 20B (i.e., a large-diameter portion on the side of a valve chamber 21 below a plate-like ring member 20E described below) with a small gap therebetween (see Fig. 12). Herein, the main valve element portion 10a and the valve orifice 22 form a main valve unit 11.

It should be noted that the outside diameter of each of the seat member 20B and the guide member 20D (and a tubular portion 15b of the sub valve element 15 described below) is set smaller than that of the plunger 37.

In this example, a plate-like ring member 20E, which is made of fluorocarbon resin, such as Teflon (registered trademark), for example, and thus is slightly elastically deformable and has low frictional resistance (i.e., sliding resistance), is held in a compressed state between the guide member 20D (or the bottom face of the fit recess portion 20Dc thereof) and the seat member 20B (or the upper end face of the fit projecting portion 20Bc thereof) forming the guide hole 19. In addition, the inner end of the plate-like ring member 20E is adapted to be in sliding contact with the outer wall (or the outer periphery) of the main valve element 10 (or the intermediate fit-inserted portion 10c thereof). It should be noted that the material of the plate-like ring member 20E is not limited to those described above as in the first embodiment.

Specifically, the plate-like ring member 20E includes, as clearly understood by referring to Fig. 8 to Fig. 11 in conjunction with Fig. 12, an annular flat-plate-like portion 20Ea held in a state compressed from its opposite sides in the vertical direction by the guide member 20D and the seat member 20B forming the guide hole 19, and a tubular portion 20Eb with an approximately cylindrical or inverted circular truncated cone shape that is continuous with the inner end of the flat-plate-like portion 20Ea while facing downward (i.e., toward the seat member 20B) and is adapted to abut the outer wall of the main valve element 10 (or the intermediate fit-inserted portion 10c thereof). In the shaped state (i.e., plastically deformed state), the inside diameter of the tubular portion 20Eb of the plate-like ring member 20E is approximately equal to (or slightly smaller than) the outside diameter of the main valve element 10 (or the intermediate fit-inserted portion 10c thereof). It should be noted that the tubular portion 20Eb may be formed as a result of the plate-like ring member 20E having been incorporated into the control valve 2 or after it is incorporated into the control valve 2 as in the first embodiment.

The gap between the valve chamber 21 (or Pd introduction ports 25 described below) and the pressure-sensitive chamber 45 (or Ps inlet/outlet ports 27 described below) (i.e., a sliding-surface gap formed between the main valve element 10 and the guide hole 19) is sealed by the plate-like ring member 20E that is securely held between the guide hole 19 and the main valve element 10.

The body member 20A is produced from a material, such as aluminum, brass, or resin, for example. In a state in which the seat member 20B is inserted into the recess hole 20C of the body member 20A, a Ps inlet/outlet chamber 28 for the suction pressure Ps in the compressor is formed around the outer periphery of the guide member 20D provided above the seat member 20B, and a plurality of (two in the illustrated drawing) Ps inlet/outlet ports 27 are formed on the outer periphery side of the Ps inlet/outlet chamber 28. The suction pressure Ps introduced into the Ps inlet/outlet chamber 28 through the Ps inlet/outlet ports 27 is introduced into the pressure-sensitive chamber 45 via the gap 36 formed between the outer periphery of the plunger 37 and the guide pipe 35 (i.e., the gap formed by the D-cut surface 37d in this example), the gap 38 formed between the outer periphery of the pushrod 46 and the attractor 34, and the like.

In addition, the housing hole 18, which has a larger diameter than those of the guide hole 19 and the main valve element portion 10a of the main valve element 10, for housing the main valve element portion 10a is provided continuously with the center of the bottom of the recess hole 20C of the body member 20A. A valve-closing spring 50, which is a conical compression coil spring, is provided in a compressed state between the corner of the outer periphery of the bottom of the housing hole 18 and a step portion (i.e., a terrace portion) 10e provided on the outer periphery of the lower portion of the main valve element portion 10a of the main valve element 10. Thus, with the urging force of the valve-closing spring 50, the main valve element 10 (i.e., the step portion between the intermediate fit-inserted portion 10c and the upper small-diameter portion 10d thereof) is pressed against the plunger 37 (or the lower face thereof). Herein, the inside of the housing hole 18 (i.e., a portion of the seat member 20B below the valve orifice 22) is the valve chamber 21.

A plurality of Pd introduction ports 25 communicating with a discharge chamber of the compressor are provided in the recess hole 20C, and a ring-like filter member 25A is disposed around the outer periphery of the Pd introduction ports 25. In addition, a plurality of horizontal holes 25s communicating with the Pd introduction ports 25 and continuous with the central hole 20Ba (i.e., the guide hole 19) are provided in the lower portion of the seat member 20B (in particular, at positions below a portion of the seat member 20B in which the intermediate fit-inserted portion 10c of the main valve element 10 is inserted) that is inserted in the recess hole 20C.

In addition, the lower end of the body member 20A has a lid-like member 48, which functions as a filter, fixed thereto by engagement or press fitting, for example. A Pc inlet/outlet chamber (inlet/outlet port) 26, which communicates with a crank chamber of the compressor, is provided above the lid-like member 48 and below the housing hole 18 (i.e., within the body member 20A on the lower end side of the seat member 20B). The Pc inlet/outlet chamber (inlet/outlet port) 26 communicates with the Pd introduction ports 25 via the valve chamber 21 → the gap between the valve orifice 22 and the main valve element portion 10a → the gap between the lower portion of the guide hole 19 and the lower small-diameter portion 10b → the horizontal holes 25s.

Further, in this embodiment, an in-valve-body communication passage 16A, which allows the Pc inlet/outlet chamber 26 and the Ps inlet/outlet chamber 28 to communicate with each other, is provided between the body member 20A and the seat member 20B of the valve body 20.

Specifically, a vertical groove 16b, which is open at its lower end to the valve chamber 21 (and the Pc inlet/outlet chamber 26), is formed around the outer periphery of the seat member 20B of the valve body 20, and an annular recess portion 16a continuous with the vertical groove 16b is formed on the inner periphery of the upper portion of the body member 20A (that is, the upper end of the recess hole 20C). The vertical groove 16b (which extends vertically) and the annular (circumferential) recess portion 16a form the in-valve-body communication passage 16A that allows the Pc inlet/outlet chamber 26 and the Ps inlet/outlet chamber 28 to communicate with each other. The in-valve-body communication passage 16A partially forms the in-valve release passage 16, and the upper end of the in-valve-body communication passage 16A (or the upper end of the annular recess portion 16C) serves as a sub valve seat portion 23 with/from which the lower end (or the sub valve element portion) 15a of the sub valve element 15 is adapted to be moved into contact or away (this will be described in detail later).

Meanwhile, the sub valve element 15 for opening or closing the in-valve release passage 16 (or the in-valve-body communication passage 16A) is disposed vertically slidably on the outer periphery of the guide member 20D that is securely disposed on the seat member 20B.

The sub valve element 15 is made of metal, for example, and includes a tubular portion 15b that is slidably disposed around the guide member 20D and has an approximately equal diameter to that (i.e., the outside diameter) of the guide member 20D. The lower end of the tubular portion 15b serves as the sub valve element portion 15a that is adapted to move into contact with or away from the sub valve seat portion 23, which is the upper end edge of the in-valve-body communication passage 16A, so as to open or close the in-valve release passage 16. Herein, the sub valve seat portion 23 and the sub valve element portion 15a form a sub valve unit 12.

In addition, a lower flanged spring holder portion 15c is provided in an (outwardly) protruding manner at the lower end of the tubular portion 15a, and an upper flanged spring holder portion 20c is provided in a protruding manner at the upper end (or on the inner periphery) of the valve body 20 (or the body member 20A thereof). A valve-closing spring 51, which is a compression coil spring with an inverted cone shape adapted to urge the sub valve element 15 downward (i.e., in the valve closing direction to close the in-valve release passage 16 (or the in-valve-body communication passage 16A)), is provided in a compressed state between the lower spring holder portion 15c and the upper spring holder portion 20c.

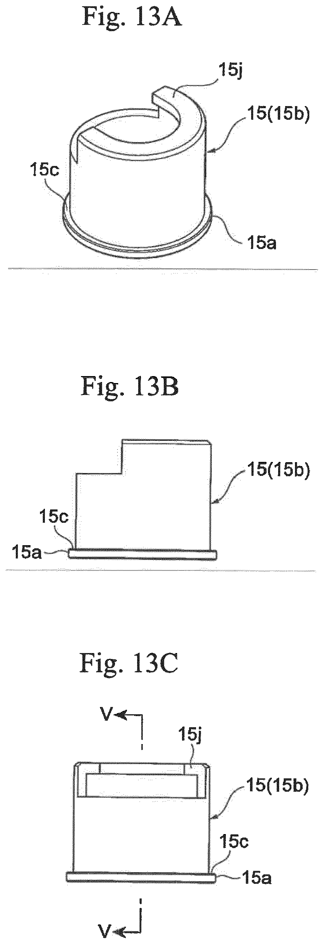

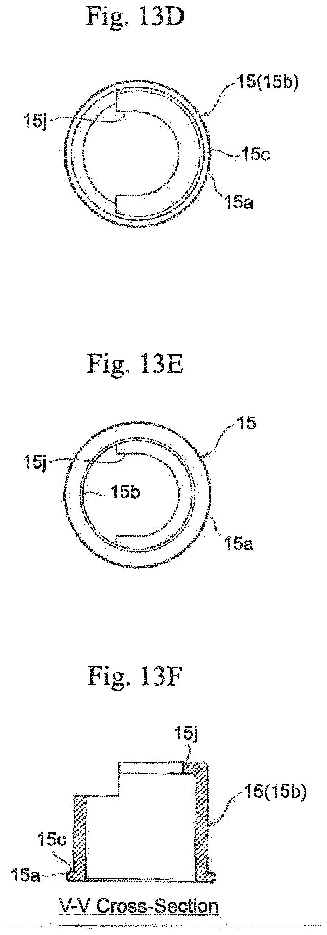

The upper end of the sub valve element 15 (or the tubular portion 15b thereof) is positioned above the guide member 20D (or the upper end thereof) by a predetermined dimension, and as clearly seen in Figs. 13A to 13F, the flanged latch portion 15j for moving the sub valve element 15 together with the plunger 37 is provided in an inwardly protruding manner at the upper-end opening (i.e., the upper end on the side remote from the sub valve element portion 15a) of the sub valve element 15 (or the tubular portion 15b thereof). Herein, the flanged latch portion 15j is provided in a portion more than half the circumference of the upper-end opening. The flanged latch portion 15j protrudes from the upper-end opening of the tubular portion 15b toward the tubular leg portion 37a of the plunger 37 that is externally arranged around the intermediate fit-inserted portion 10c of the main valve element 10 so that when the plunger 37 is moved upward with respect to the sub valve element 15, the flanged latch portion 15j is latched to the outer flanged latch portion 37j of the plunger 37 (or the tubular leg portion 37a thereof).

In this embodiment, as described above, the Pc inlet/outlet chamber 26, the valve chamber 21, the in-valve-body communication passage 16A provided in the valve body 20, the Ps inlet/outlet chamber 28, and the like form the in-valve release passage 16 for releasing the crank chamber pressure Pc to the suction chamber of the compressor via the Ps inlet/outlet ports 27. The in-valve release passage 16 is adapted to be opened or closed as the sub valve element portion (or the lower end) 15a of the sub valve element 15 is moved into contact with or away from the sub valve seat portion 23 that is the upper end edge of the in-valve-body communication passage 16A.

When the main valve element 10, the sub valve element 15, and the plunger 37 are attached together, for example, the main valve element 10 is attached to the guide hole 19 of the valve body 20 (from the bottom side), and the sub valve element 15 is attached to the guide member 20D (from the top side). Then, the plunger 37 is moved horizontally with respect to the main valve element 10 and the sub valve element 15 so that the flanged latch portion 10k and the upper small-diameter portion 10d of the main valve element 10 are inserted into the cutout 37t and the slit 37s, respectively, of the plunger 37, the intermediate fit-inserted portion 10c of the main valve element 10 is disposed on the inner side of the tubular leg portion 37a with an approximately C-shape as seen in plan view from the open portion of the tubular leg portion 37a, and the tubular leg portion 37a is disposed on the inner side of the upper end of the tubular portion 15b and the flanged latch portion 15j of the sub valve element 15 via an open portion (i.e., a portion where the flanged latch portion 15j is not provided) at the upper end of the sub valve element 15, and thereafter, the upper small-diameter portion 10d of the main valve element 10 may be fitted and inserted deep inside the slit 37s of the plunger 37 (i.e., on the central axis O of the plunger 37).

In the control valve 2 of this embodiment, when the plunger 37, the main valve element 10, and the sub valve element 15 are at the lowest position (when the bottom end face of the plunger 37 (i.e., the lower end face of the outer flanged latch portion 37j of the tubular leg portion 37a of the plunger 37) abuts the guide member 20D (or the stopper portion 24 formed by the upper face thereof), the main valve unit 11 is in the fully open position, and the sub valve unit 12 is in the fully closed position) as illustrated in Fig. 8, the clearance in the vertical direction between the main valve element portion 10a of the main valve element 10 and the valve orifice 22 (i.e., the valve seat portion) is represented by a first lift amount La, and the clearance between the outer flanged latch portion 37j of the plunger 37 and the flanged latch portion 15j of the sub valve element 15 is represented by a second lift amount Lb (> La), and the clearance between the inner flanged latch portion 37k of the plunger 37 and the flanged latch portion 10k of the main valve element 10 is represented by a predetermined amount Lx. The maximum lift amount (i.e., third lift amount) Lc (> Lb) of the plunger 37 (i.e., the lift amount of from the lowest position to the highest position of the plunger 37) corresponds to the first lift amount La + the predetermined amount Lx. That is, each of the clearances is set so as to satisfy the relationship of Lx > Lb - La.

### [Operation of control valve 2]

Next, the operation of the control valve 2 with the aforementioned configuration will be briefly described.

During the normal control time (Pd → Pc control time), the lift amount of the plunger 37 is slightly greater than the first lift amount La at the maximum, and during the compressor actuation time (Pc → Ps control time), the lift amount of the plunger 37 is the third lift amount Lc.

That is, during the normal control time (Pd → Pc control time), when the solenoid portion 30A including the coil 32, the stator 33, the attractor 34, and the like is supplied with current and energized, the plunger 37 is attracted by the attractor 34, and along with the movement of the plunger 37, the main valve element 10 is moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap 36 between the outer periphery of the plunger 37 and the guide pipe 35 and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the interior member 17, and the plunger 37, whereby the valve opening degree (i.e., clearance between the valve orifice 22 and the main valve element portion 10a) is regulated, and the crank chamber pressure Pc is controlled in accordance with the valve opening degree.

In this case, the main valve element 10 is always urged upward with the urging force of the valve-closing spring 50, and the flanged latch portion 15j of the sub valve element 15 is not latched to the outer flanged latch portion 37j of the plunger 37 (since Lb > La), and thus the sub valve element 15 is always urged downward with the urging force of the valve-closing spring 51. Thus, the sub valve element portion 15a is in a state of being pressed against the sub valve seat portion 23 (i.e., the sub valve unit 12 is closed), and the in-valve release passage 16 is blocked within the valve body 20. Therefore, the crank chamber pressure Pc will not be released to the suction chamber via the in-valve release passage 16.

In contrast, during the compressor actuation time, the solenoid portion 30A is supplied with current and energized, and the plunger 37 is attracted by the attractor 34, and along with the upward movement of the plunger 37, the main valve element 10 is also moved upward and the valve orifice 22 is closed by the main valve element portion 10a of the main valve element 10. After that, the plunger 37 is further moved upward, whereby the sub valve element 15 is caused to open the in-valve release passage 16. Thus, the crank chamber pressure Pc is released into the suction chamber via the in-valve release passage 16.

Specifically, until the upward movement amount of the plunger 37 reaches the first lift amount La, the main valve element 10 moves in the direction to close the valve such that it follows the upward movement of the plunger 37 with the urging force of the valve-closing spring 50. Then, when the upward movement amount has reached the first lift amount La, the valve orifice 22 is closed by the main valve element portion 10a of the main valve element 10 (the state illustrated in Fig. 9). During the compressor actuation time, the plunger 37 is further moved upward with the main valve unit 11 in the closed-valve state (with the main valve element 10 remaining still in the closed-valve state). Until the upward movement amount of the plunger 37 reaches the second lift amount Lb, the sub valve element 15 remains still in the closed-valve state (with the sub valve element portion 15a still pressed against the sub valve seat portion 23) with the urging force of the valve-closing spring 51. When the upward movement amount has reached the second lift amount Lb, the outer flanged latch portion 37j of the plunger 37 is latched to the flanged latch portion 15j of the sub valve element 15 (i.e., the state illustrated in Fig. 10). In such a state, the plunger 37 is further moved upward until the inner flanged latch portion 37k of the plunger 37 is latched to the flanged latch portion 10k of the main valve element 10, that is, by the amount of Lx - (Lb - La) (i.e., the state illustrated in Fig. 11). That is, after the upward movement amount of the plunger 37 has reached the first lift amount La, the sub valve element 15 is elevated (from the valve body 20) by the amount of Lx - (Lb - La) until the inner flanged latch portion 37k of the plunger 37 is latched to the flanged latch portion 10k of the main valve element 10. In such a case, the main valve element 10 remains still in the closed-valve state, while the sub valve element portion 15a of the sub valve element 15 is lifted from the sub valve seat portion 23 by the amount of Lx - (Lb - La), whereby the in-valve release passage 16 is opened. When the inner flanged latch portion 37k of the plunger 37 is latched to the flanged latch portion 10k of the main valve element 10, neither the plunger 37 nor the sub valve element 15 is lifted any further even if the solenoid portion 30A generates attraction.

As described above, in the control valve 2 of the second embodiment, since the crank chamber pressure Pc is released to the suction chamber via the in-valve release passage 16 during the compressor actuation time, it is possible to significantly shorten the time required to increase the discharge capacity during the compressor actuation time. In addition, since the in-valve release passage 16 is closed by the sub valve element 15 during the normal control time (i.e., Pd→Pc control time), the operation efficiency of the compressor will not decrease.

In addition, in the control valve 2 of the second embodiment, as in the control valve 1 of the first embodiment, the plate-like ring member 20E disposed between the guide hole 19 and the main valve element 10 can prevent intrusion of foreign matter into the sliding-surface gap (i.e., clearance) that is formed between the main valve element 10 and the guide hole 19. In addition, the plate-like ring member 20E can suppress frictional resistance (or improve the sliding properties) and thus can have suppressed deformation (i.e., a suppressed amount of warp) in comparison with an O-ring that is disposed in the conventional control valve as a sealing member, for example. Thus, an increase in the sliding resistance and deterioration of the control properties associated therewith can be effectively suppressed.

In the aforementioned embodiment, although the in-valve-body communication passage 16A, which partially forms the in-valve release passage 16, is formed by the vertical groove 16b formed on the outer periphery of the seat member 20B of the valve body 20 and the annular recess portion 16a formed on the inner periphery of the body member 20, it is needless to mention that the in-valve-body communication passage 16A may be provided on one of the seat member 20B side or the body member 20A side, for example, and the shape of the in-valve-body communication passage 16A is not limited to the aforementioned shape. Alternatively, for example, the body member 20A and the seat member 20B of the valve body 20 may be formed as a unitary component, and an in-valve-body communication passage including a through-hole and the like may be formed in such a component.

It is also needless to mention that the place where the sub valve element 15 for opening or closing the in-valve release passage 16 is disposed, the shape of the sub valve element 15, a mechanism for coupling the sub valve element 15 and the plunger 37, and the like can be changed as appropriate.

### <Third embodiment>

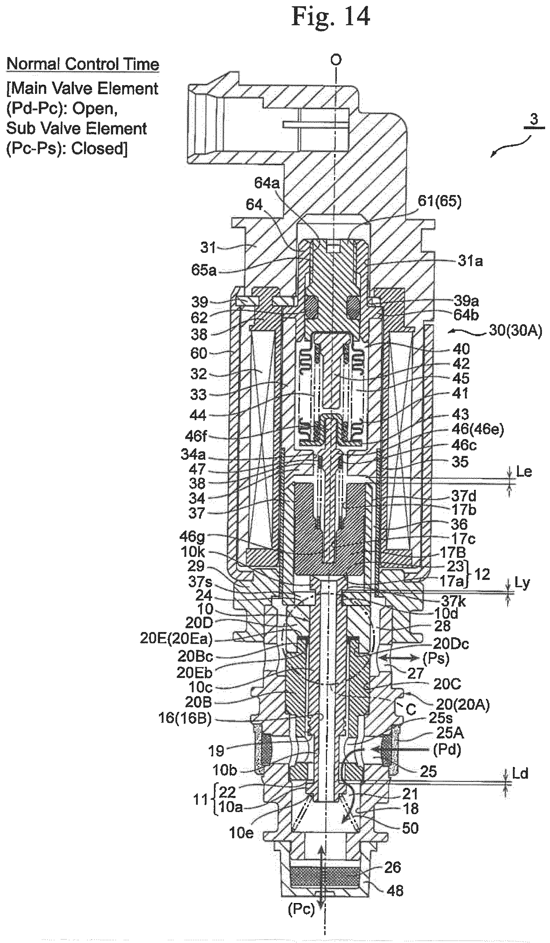

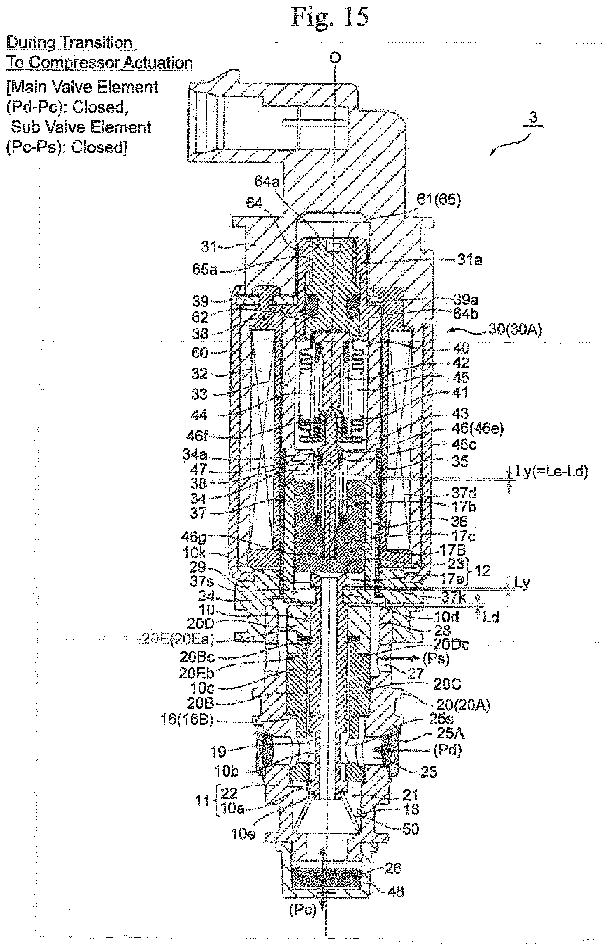

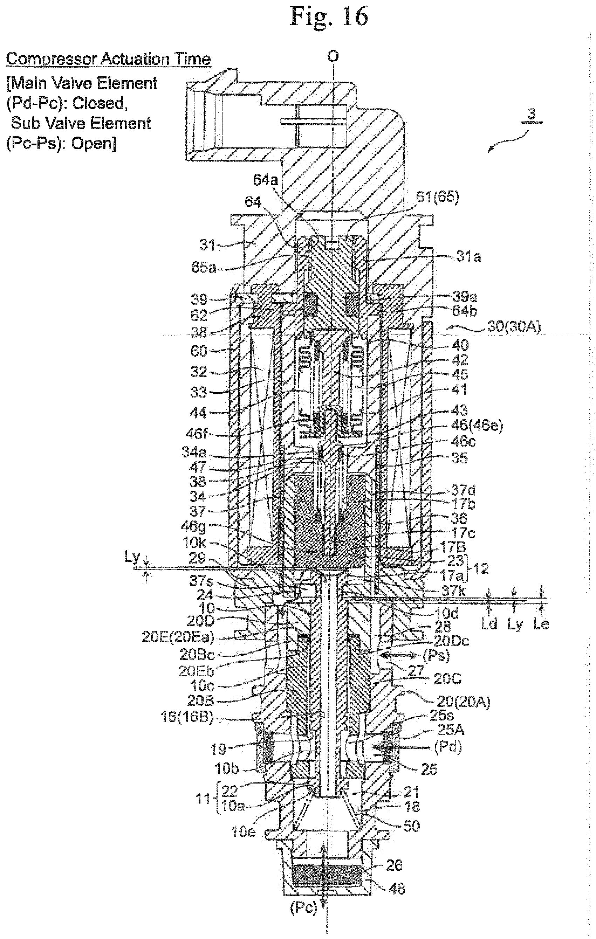

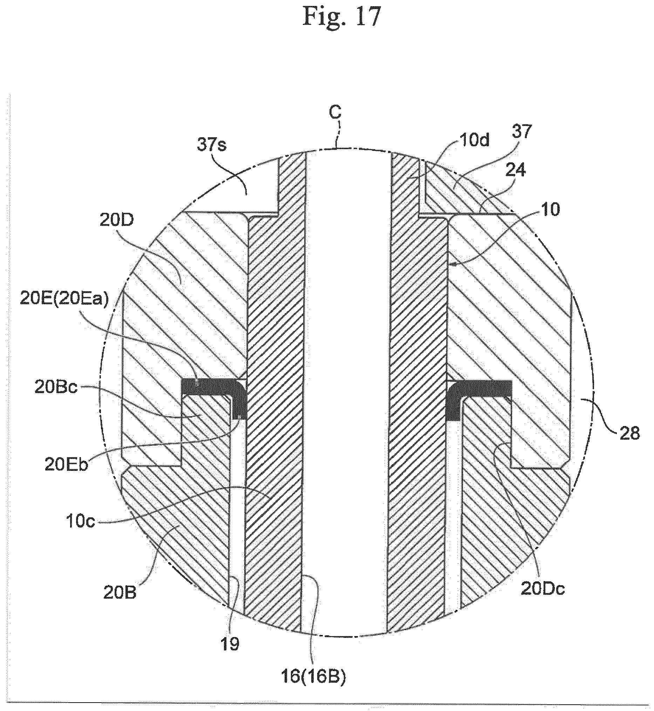

Fig. 14 to Fig. 16 are longitudinal sectional views of a third embodiment of the variable-capacity compressor control valve according to the present invention. Specifically, Fig. 14 illustrates a state in which a main valve element is in the open position and a sub valve element is in the closed position (i.e., during the normal control time), Fig. 15 illustrates a state in which the main valve element is in the closed position and the sub valve element is in the closed position (i.e., during the time of transition to compressor actuation), and Fig. 16 illustrates a state in which the main valve element is in the closed position and the sub valve element is in the open position (i.e., during the compressor actuation time). Fig. 17 is an enlarged view of a portion C of Fig. 14.

A control valve 3 of the third embodiment differs from the control valve 2 of the aforementioned second embodiment in that the in-valve release passage 16 for releasing the crank chamber pressure Pc to the suction chamber of the compressor via the Ps inlet/outlet ports 27 is provided in the main valve element 10 (not in the valve body 20), and the other configurations are substantially the same. Therefore, portions having the same configurations and operational advantages as those of the control valve 2 of the second embodiment are denoted by the same reference numerals, and the repeated description will be omitted. The following mainly discusses the differences.

### [Configuration of control valve 3]

In the control valve 3 of the embodiment illustrated in the drawings, the tubular leg portion 37a provided on the lower face of the plunger 37, the in-valve-body communication passage 16A in the valve body 20, the sub valve element 15 having the tubular portion 15b externally arranged around the guide member 20D of the valve body 20, and the like that are provided in the control valve 2 of the aforementioned second embodiment are omitted, and an interior member 17 securely inserted in the plunger 37 is formed as a sub valve element 17B so that the sub valve element 17B and the plunger 37 are configured to move together vertically in a state in which the sub valve element (or the interior member) 17B is urged downward by a plunger spring 47 provided in a compressed state between the sub valve element 17B and a step portion 46c formed on the large-diameter portion 46e of the pushrod 46. With the plunger spring 47 (or the compressive force thereof), the sub valve element 17B is urged in the direction to close the in-valve release passage 16 described below, and the bellows device 40 is held within the pressure-sensitive chamber 45 via the pushrod 46.

In this embodiment, the main valve element 10 disposed below the sub valve element 17B is produced from a non-magnetic material, for example, and a release through-hole 16B, which partially forms the in-valve release passage 16, is provided in the center of the inside of the main valve element 10 in a manner penetrating therethrough in the vertical direction (i.e., the direction of the axis O).

The sub valve element 17B is securely inserted in the plunger 37 above the main valve element 10 as described above. The outside diameter of the sub valve element 17B (= the inside diameter of the plunger 37) is set larger than the outside diameter of the flanged latch portion 10k of the main valve element 10, and the lower end (i.e., a planar face) of the sub valve element 17B serves as a sub valve element portion 17a that is adapted to move into contact with or away from a sub valve seat portion (i.e., an inverted circular truncated cone portion) 23, which is the upper end edge of the release through-hole 16B, and thus open or close the in-valve release passage 16.

As described above, in the third embodiment, the Pc inlet/outlet chamber 26, the valve chamber 21, the release through-hole 16B formed in the main valve element 10, the inside of the plunger 37, the Ps inlet/outlet chamber 28, and the like form the in-valve release passage 16 for releasing the crank chamber pressure Pc to the suction chamber of the compressor via the Ps inlet/outlet ports 27. The in-valve release passage 16 is adapted to be opened or closed as the sub valve element portion (or the lower end) 17a of the sub valve element 17B is moved into contact with or away from the sub valve seat portion 23 that is the upper end edge of the release through-hole 16B of the main valve element 10.

In the control valve 3 of this embodiment, when the plunger 37, the main valve element 10, and the sub valve element 17B are at the lowest position (when the bottom end face of the plunger 37 abuts the guide member 20D (or the stopper portion 24 formed by the upper face thereof), the main valve unit 11 is in the fully open position, and the sub valve unit 12 is in the fully closed position) as illustrated in Fig. 14, the clearance in the vertical direction between the main valve element portion 10a of the main valve element 10 and the valve orifice 22 (i.e., the valve seat portion) is represented by a first lift amount Ld, and the clearance between the inner flanged latch portion 37k of the plunger 37 and the flanged latch portion 10k of the main valve element 10 is represented by a predetermined amount Ly. The maximum lift amount (i.e., second lift amount) Le of the plunger 37 (i.e., the lift amount of from the lowest position to the highest position of the plunger 37) corresponds to the first lift amount Ld + the predetermined amount Ly.

In the control valve 3 of the third embodiment, as in the control valve 2 of the second embodiment, in order to seal the gap between the valve chamber 21 (or the Pd introduction ports 25) and the pressure-sensitive chamber 45 (or the Ps inlet/outlet ports 27) (i.e., a sliding-surface gap formed between the main valve element 10 and the guide hole 19), a plate-like ring member 20E, which is made of fluorocarbon resin, such as Teflon (registered trademark), for example, and thus is slightly elastically deformable and has low frictional resistance (i.e., sliding resistance), is held in a compressed state between the guide member 20D (or the bottom face of the fit recess portion 20Dc thereof) and the seat member 20B (or the upper end face of the fit projecting portion 20Bc thereof) forming the guide hole 19. In addition, the inner end of the plate-like ring member 20E (i.e., a tubular portion 20Eb with an approximately cylindrical shape) is adapted to be in sliding contact with the outer wall (or the outer periphery) of the main valve element 10 (or the intermediate fit-inserted portion 10c thereof) (see, in particular, Fig. 17). It should be noted that the material of the plate-like ring member 20E is not limited to those described above as in the first and second embodiments. It should be noted that the tubular portion 20Eb may be formed as a result of the plate-like ring member 20E having been incorporated into the control valve 3 or after it is incorporated into the control valve 3 as in the first and second embodiments.

### [Operation of control valve 3]

Next, the operation of the control valve 3 with the aforementioned configuration will be briefly described.

During the normal control time (Pd → Pc control time), the lift amount of the plunger 37 (and the sub valve element 17B) is slightly greater than the first lift amount Ld at the maximum, and during the compressor actuation time (Pc → Ps control time), the lift amount of the plunger 37 (and the sub valve element 17B) is the second lift amount Le.

That is, during the normal control time (Pd → Pc control time), when the solenoid portion 30A including the coil 32, the stator 33, the attractor 34, and the like is supplied with current and energized, the plunger 37 and the sub valve element 17B are together attracted (upward) by the attractor 34, and along with the movement of the plunger 37 and the sub valve element 17B, the main valve element 10 is also moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap 36 between the outer periphery of the plunger 37 and the guide pipe 35 and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the sub valve element 17B, and the like, whereby the valve opening degree (i.e., clearance between the valve orifice 22 and the main valve element portion 10a) is regulated, and the crank chamber pressure Pc is controlled in accordance with the valve opening degree.

In this case, the main valve element 10 is always urged upward with the urging force of the valve-closing spring 50, while the sub valve element 17B is always urged downward with the urging force of the valve-opening spring 47. Thus, the sub valve element portion 17a is in a state of being pressed against the sub valve seat portion 23 (i.e., the sub valve unit 12 is closed), and the in-valve release passage 16 is blocked within the main valve element 10. Therefore, the crank chamber pressure Pc will not be released to the suction chamber via the in-valve release passage 16.

In contrast, during the compressor actuation time, the solenoid portion 30A is supplied with current and energized, and the plunger 37 and the sub valve element 17B are together attracted (upward) by the attractor 34, and along with the upward movement of the plunger 37 and the sub valve element 17B, the main valve element 10 is also moved upward and the valve orifice 22 is closed by the main valve element portion 10a of the main valve element 10. After that, the plunger 37 and the sub valve element 17B are further moved upward, whereby the sub valve element 17B is caused to open the in-valve release passage 16. Thus, the crank chamber pressure Pc is released into the suction chamber via the in-valve release passage 16.

Specifically, until the upward movement amount of the plunger 37 (and the sub valve element 17B) reaches the first lift amount Ld, the main valve element 10 moves in the direction to close the valve such that it follows the upward movement of the plunger 37 and the sub valve element 17B with the urging force of the valve-closing spring 50. Then, when the upward movement amount has reached the first lift amount Ld, the valve orifice 22 is closed by the main valve element portion 10a of the main valve element 10 (the state illustrated in Fig. 15), and the plunger 37 and the sub valve element 17B are further moved upward by the predetermined amount Ly with the main valve unit 11 in the closed-valve state (the state illustrated in Fig. 16). That is, after the upward movement amount of the plunger 37 and the sub valve element 17B has reached the first lift amount Ld, the sub valve element 17B is attracted together with the plunger 37 toward the attractor 34 by the predetermined amount Ly until the inner flanged latch portion 37k of the plunger 37 is latched to the flanged latch portion 10k of the main valve element 10 (the first lift amount Ld + the predetermined amount Ly = the second lift amount Le). In such a case, the main valve element 10 remains still in the closed-valve state. Thus, the sub valve element portion 17a of the sub valve element 17B is lifted from the sub valve seat portion 23 by the predetermined amount Ly, whereby the in-valve release passage 16 is opened. When the inner flanged latch portion 37k of the plunger 37 is latched to the flanged latch portion 10k of the main valve element 10, neither the plunger 37 nor the sub valve element 17B is lifted any further even if the solenoid portion 30A generates attraction.

It is needless to mention that the control valve 3 of the third embodiment with the aforementioned configuration can obtain the same operational advantages as those of the control valve 2 of the aforementioned second embodiment. For specific structures of the control valve 3 of the third embodiment, see JP Patent Application No. 2016-127978 of the same inventors, if necessary.

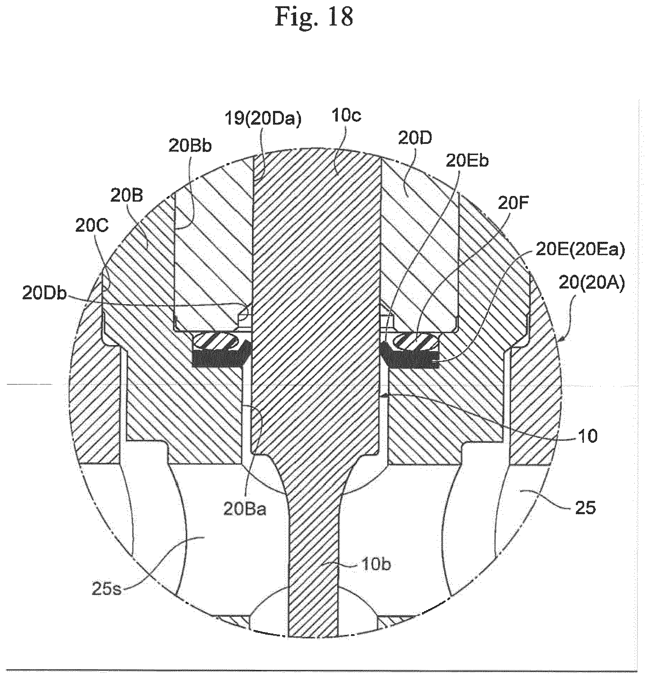

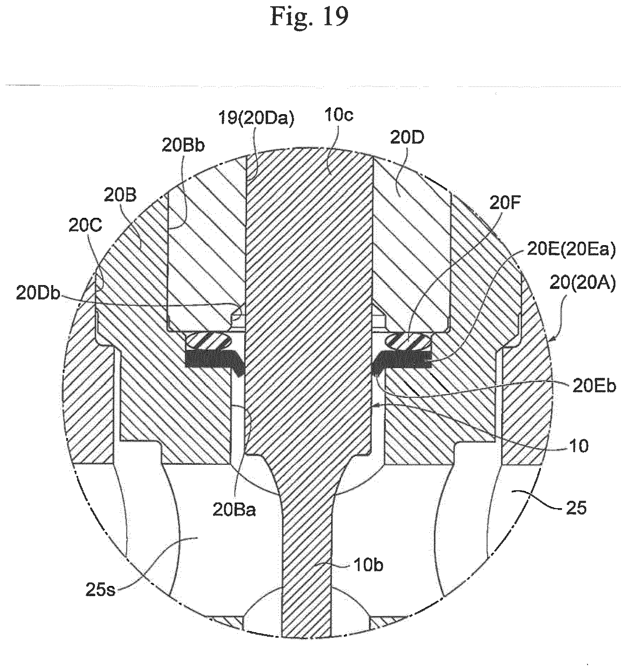

In the aforementioned first to third embodiments, the plate-like ring member 20E is sandwiched between the guide member 20D (or a lower face thereof) and the seat member 20B (or an upper face thereof) forming the guide hole 19. However, the plate-like ring member 20E may be securely held with an O-ring 20F made of rubber (in a compressed state) as illustrated in Fig. 18 and Fig. 19, for example, so that deterioration of the plate-like ring member 20E with time due to the creep phenomenon would be avoided. In the example illustrated in Fig. 18, the inner end (i.e., the tubular portion 20Eb) of the plate-like ring member 20E is curved on the lower-pressure side (that is, the side of the pressure-sensitive chamber 45 and the Ps inlet/outlet ports 27), while in the example illustrated in Fig. 19, the inner end (i.e., the tubular portion 20Eb) of the plate-like ring member 20E is curved on the higher-pressure side (that is, the side of the valve chamber 21 and the Pd introduction ports 25) (see also Fig. 6 and Fig. 7). In such a case, the O-ring 20F may be disposed on either one or each of the upper face side (i.e., the side of the guide member 20D) and the lower face side (i.e., the side of the seat member 20B) of the plate-like ring member 20E. However, the O-ring 20F is preferably disposed in a compressed state on the upper face side of the plate-like ring member 20E (that is, a side of the plate-like ring member 20E remoted from the valve chamber 21) as illustrated in Fig. 18 and Fig. 19 so that deformation of the O-ring 20F due to the pressure of a fluid flowing through the valve chamber 21 is suppressed, for example. It should be noted that in the examples illustrated in Fig. 18 and Fig. 19, the tubular portion 20Eb may be formed as a result of the plate-like ring member 20E having been incorporated into the control valve or after it is incorporated into the control valve as in each of the aforementioned embodiments.

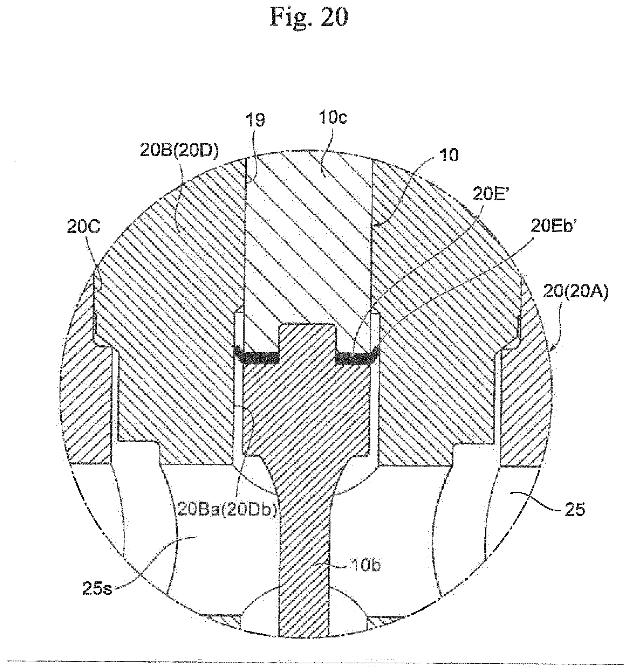

Although the plate-like ring member 20E in each of the aforementioned first to third embodiments is securely held in the guide hole 19 (between the guide member 20D and the seat member 20B forming the guide hole 19) with the inner end of the plate-like ring member 20E adapted to be in sliding contact with the outer wall (or the outer periphery) of the main valve element 10, it is also possible to, as illustrated in Fig. 20, for example, securely hold a plate-like ring member 20E' on the main valve element 10, with the outer end of the plate-like ring member 20E' (or a tubular portion 20Eb' provided thereon) adapted to be in sliding contact with the inner wall (or the inner periphery) of the guide hole 19 so as to seal the gap between the valve chamber 21 and the pressure-sensitive chamber 45 (i.e., a sliding-surface gap formed between the main valve element 10 and the guide hole 19). In such a case, it is needless to mention that the plate-like ring member 20E' may be securely held with an O-ring 20F made of rubber (in a compressed state).

### Reference Signs List

- 1: Variable-capacity compressor control valve (first embodiment)
- 2: Variable-capacity compressor control valve (second embodiment)
- 3: Variable-capacity compressor control valve (third embodiment)
- 10: Main valve element
- 10a: Main valve element portion
- 10b: Lower small-diameter portion
- 10c: Intermediate fit-inserted portion
- 10d: Upper small-diameter portion
- 10k: Flanged latch portion
- 11: Main valve unit
- 12: Sub valve unit
- 15: Sub valve element
- 16: In-valve release passage
- 16A: In-valve-body communication passage
- 16B: Release through-hole
- 17: Interior member
- 17B: Sub valve element
- 18: Housing hole
- 19: Guide hole
- 20: Valve body
- 20A: Body member
- 20B: Seat member
- 20Ba: Central hole
- 20C: Recess hole
- 20D: Guide member
- 20Da: Central hole
- 20E: Plate-like ring member
- 20F: O-ring
- 21: Valve chamber
- 22: Valve orifice
- 23: Sub valve seat portion
- 24: Stopper portion
- 25: Pd introduction port
- 25s: Horizontal hole
- 26: Pc inlet/outlet chamber (inlet/outlet port)
- 27: Ps inlet/outlet port
- 28: Ps inlet/outlet chamber
- 30: Electromagnetic actuator
- 30A: Solenoid portion
- 32: Coil
- 33: Stator
- 34: Attractor
- 37: Plunger
- 40: Bellows device (pressure-sensitive reaction member)
- 45: Pressure-sensitive chamber
- 46: Pushrod
- 50: Valve-closing spring
- 51: Valve-closing spring

## Claims

1. A variable-capacity compressor control valve comprising:
a main valve element including a main valve element portion;
a valve body including
a guide hole through which the main valve element is adapted to be slidably fitted and inserted,
a valve chamber with a valve orifice, the valve orifice being adapted to be in contact with or away from the main valve element portion as the main valve element portion is moved,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator adapted to move the main valve element in a direction to open or close the valve orifice;
a pressure-sensitive chamber adapted to receive a suction pressure Ps from the compressor via the Ps inlet/outlet port;
a pressure-sensitive reaction member adapted to urge the main valve element in the direction to open or close the valve orifice in accordance with a pressure in the pressure-sensitive chamber; and
a plate-like ring member disposed between the guide hole and the main valve element, the plate-like ring member having an inner or outer end that is curved and shaped into a tubular shape and thus forming a tubular portion, the tubular portion being adapted to be in sliding contact with an outer wall of the main valve element or an inner wall of the guide hole so as to seal a gap between one of the valve chamber or the Pd introduction port and one of the pressure-sensitive chamber or the Ps inlet/outlet port.

2. The variable-capacity compressor control valve according to claim 1, wherein a gap is provided between the main valve element and a portion of the guide hole below the plate-like ring member and on the side of the valve chamber.

3. The variable-capacity compressor control valve according to claim 1 or 2,
wherein:
the plate-like ring member has the tubular portion formed at the inner end of the plate-like ring member, and
the plate-like ring member is securely held in the guide hole with the tubular portion adapted to be in sliding contact with the outer wall of the main valve element.

4. The variable-capacity compressor control valve according to claim 3, wherein the plate-like ring member is sandwiched between two members forming the guide hole of the valve body.

5. The variable-capacity compressor control valve according to claim 4, wherein the two members are fixed together through press fitting.

6. The variable-capacity compressor control valve according to claim 4 or 5, wherein at least one of the two members has a stopper portion, the stopper portion being adapted to regulate movement of a plunger of the electromagnetic actuator.

7. The variable-capacity compressor control valve according to any one of claims 1 to 6, wherein the plate-like ring member is securely held with an O-ring in the guide hole or around the main valve element.

8. The variable-capacity compressor control valve according to claim 7, wherein the O-ring is disposed on a side of the plate-like ring member remote from the valve chamber.

9. The variable-capacity compressor control valve according to claim 1 or 2,
wherein:
the plate-like ring member has the tubular portion formed at the outer end of the plate-like ring member, and
the plate-like ring member is securely fixed on the main valve element with the tubular portion adapted to be in sliding contact with the inner wall of the guide hole.

10. The variable-capacity compressor control valve according to any one of claims 1 to 9, further comprising:
an in-valve release passage provided in the valve body or the main valve element, the in-valve release passage being adapted to release a pressure Pc in the crank chamber to the suction chamber of the compressor via the Ps inlet/outlet port; and
a sub valve element adapted to open or close the in-valve release passage.
